# EUROPEAN PATENT APPLICATION

(11) **EP 4 800 883 A1**
(43) Date of publication of application: **02.09.2026**
(21) Application number: 24882386.6
(22) Date of filing: 22.10.2024
(51) Int. Cl.: H02J 50/20, H02J 50/40, H02J 50/80

(54) **WIRELESS POWER SUPPLY SYSTEM, WIRELESS POWER SUPPLY METHOD, AND PROGRAM**

(30) Priority: 24.10.2023 JP 2023182229; 24.10.2023 JP 2023182230
(71) Applicant: Toppan Holdings Inc., Tokyo 110-0016 (JP)
(72) Inventor: KITTA Ryokei, Tokyo 110-0016 (JP); KIGAWA Shota, Tokyo 110-0016 (JP); SAITO Eisuke, Tokyo 110-0016 (JP)
(74) Representative: TBK
(86) International application number: PCT/JP2024/037606
(87) International publication number: WO 2025/089275

(57) **Abstract**

The disclosure provides a wireless power supply system (1) including a receiver device processing section (142) that registers receiver device information with a system (60) corresponding to an application (AP) provided to users of a space where a transmitter device (30) for wireless power supply is installed, the information being related to a receiver device (20) owned by a user of the application (AP) and acquired via the application (AP); a power supply request section (143) that causes the application (AP) to transmit a power supply request to the system (60) corresponding to the application (AP) in response to receiving a power supply request from the user via the application (AP); a linking processing section (632) that causes the system (60) corresponding to the application (AP) to associate the receiver device information of the receiver device (20) selected as a power supply target, with a power supply control system (50) in response to receiving the power supply request from the application (AP); and a power transmission processing section (531) that identifies a transmitter device (30) that can transmit power to the receiver device (20) as a power supply target, based on the receiver device information associated by the system (60) corresponding to the application (AP) and causes the power supply control system (50) to transmit a power transmission request to the identified transmitter device (30).

## Description

### [Technical Field]

The present invention relates to wireless power supply systems, wireless power supply methods, and programs. The present application is based on and claims the benefits of priorities from Japanese Patent Application Nos. 2023-182229 and 2023-182230 both filed in Japan on October 24, 2023, the contents of which are incorporated herein by reference.

### [Background Art]

In recent years, various wireless power supply technologies have been proposed that enable power to be supplied wirelessly from a transmitter device to a receiver device (e.g., see PTL 1 below).

When introducing wireless power supply to stores, etc. in commercial facilities, for example, the transmitter device is configured not to simultaneously transmit power to all receiver devices within the transmission range, but to transmit power only to authenticated receiver devices that require power reception. In this case, users of the wireless power supply are required to register in advance the device (receiver device) they wish to receive power from so that the receiver device can be authenticated and receive power when it enters the power transmission range of the transmitter device. For this purpose, users have been required to install an application program for registration (hereinafter also referred to as application) in a terminal for registration.

In addition, when using wireless power supply at multiple different commercial facilities, users have been required to register the device they wish to receive power from with each commercial facility.

### [Citation List]

### [Patent Literature]

PTL 1: JP2021191120A

### [Summary of the Invention]

### [Technical Problem]

However, installing a new application and then registering the device they wish to receive power from in order to use wireless power supply have been barriers to the users using wireless power supply.

In light of the issues set forth above, the present invention aims to provide a wireless power supply system that can reduce barriers to user adoption of wireless power supply and to provide a wireless power supply method and a program.

### [Solution to Problems]

In order to solve the issues set forth above, a first aspect of the present invention is a wireless power supply system, including a receiver device processing section that registers receiver device information with a system corresponding to an application provided to users of a space where a transmitter device for wireless power supply is installed, the receiver device information being related to a receiver device owned by a user of the application, the receiver device information being acquired via the application; a power supply request section that causes the application to transmit a power supply request to the system corresponding to the application in response to receiving the power supply request from the user via the application; a linking processing section that causes the system corresponding to the application to associate the receiver device information of a receiver device selected as a power supply target, with a power supply control system in response to receiving the power supply request from the application; and a power transmission processing section that identifies a transmitter device that can transmit power to the receiver device as the power supply target, based on the receiver device information associated by the system corresponding to the application and causes the power supply control system to transmit a power transmission request to the identified transmitter device.

A second aspect of the present invention is the wireless power supply system according to the first aspect, wherein the linking processing section causes the system corresponding to the application to associate power supply setting information that is set for each receiver device by the user via the application, with the power supply control system; and the power transmission processing section controls power transmission performed by the transmitter device based on the receiver device information and the power supply setting information.

A third aspect of the present invention is the wireless power supply system according to the first aspect, further including a power supply management section that acquires power supply status information indicating power supply status of the receiver device as a result of power transmission from the transmitter device; and an output control section that causes the application to display the power supply status for the receiver device based on the acquired power supply status information.

A fourth aspect of the present invention is the wireless power supply system according to the first aspect, wherein the power transmission processing section determines a power transmission parameter based on a power transmission policy and controls power transmission of the transmitter device based on the determined power transmission parameter.

A fifth aspect of the present invention is the wireless power supply system according to the fourth aspect, wherein the power transmission processing section determines the power transmission parameter according to the power transmission policy, based on the receiver device information acquired from the system corresponding to the application.

A sixth aspect of the present invention is the wireless power supply system according to the fourth aspect, wherein the power transmission processing section determines the power transmission parameter according to the power transmission policy, based on usage status information indicating a service usage status of the user, acquired from the system corresponding to the application.

A seventh aspect of the present invention is a computer-implemented wireless power supply method, including steps of registering receiver device information with a system corresponding to an application provided to users of a space where a transmitter device for wireless power supply is installed, the receiver device information being related to a receiver device owned by a user of the application, the receiver device information being acquired via the application; causing the application to transmit a power supply request to the system corresponding to the application in response to receiving the power supply request from the user via the application; causing the system corresponding to the application to associate the receiver device information of a receiver device selected as a power supply target, with a power supply control system in response to receiving the power supply request from the application; and identifying a transmitter device that can transmit power to the receiver device as the power supply target, based on the receiver device information associated by the system corresponding to the application and causing the power supply control system to transmit a power transmission request to the identified transmitter device.

An eighth aspect of the present invention is a program allowing a computer to register receiver device information with a system corresponding to an application provided to users of a space where a transmitter device for wireless power supply is installed, the receiver device information being related to a receiver device owned by a user of the application, the receiver device information being acquired via the application; cause the application to transmit a power supply request to the system corresponding to the application in response to receiving the power supply request from the user via the application; cause the system corresponding to the application to associate the receiver device information of a receiver device selected as a power supply target, with a power supply control system in response to receiving the power supply request from the application; and identify a transmitter device that can transmit power to the receiver device as the power supply target, based on the receiver device information associated by the system corresponding to the application and cause the power supply control system to transmit a power transmission request to the identified transmitter device.

A ninth aspect of the present invention is a wireless power supply system, including a receiver device processing section that registers receiver device information with a first system corresponding to a first application that can register a receiver device as a power supply target in wireless power supply, the information being related to a receiver device owned by a user and acquired via the first application; a first linking processing section that associates the first application with a second application provided to users of a space where a transmitter device for the wireless power supply is installed, based on an operation from the second application; a power supply request section that causes an application as a requester of a power supply request to transmit the power supply request to a corresponding system in response to receiving the power supply request from the user via the first application or the second application, the power supply request being for a receiver device indicated by the receiver device information acquired from the first system as a result of the linking; a second linking processing section that causes a system corresponding to the application as the requester to associate the receiver device information of a receiver device selected as the power supply target, with a power supply control system in response to receiving the power supply request from the application as the requester; and a power transmission processing section that identifies a transmitter device that can transmit power to the receiver device as the power supply target, based on the associated receiver device information and causes the power supply control system to transmit a power transmission request to the identified transmitter device.

A tenth aspect of the present invention is the wireless power supply system according to the ninth aspect, wherein when the user provides the power supply request via the second application, the first linking processing section causes the second application to transmit a link request to the first system to cause the first system to associate the receiver device information with the second application; the power supply request section causes the second application to transmit the power supply request to a second system that is a system corresponding to the second application; and the second linking processing section causes the second system to associate the receiver device information with the power supply control system.

An eleventh aspect of the present invention is the wireless power supply system according to the ninth aspect, wherein when the user provides the power supply request via the first application, the first linking processing section causes the second application to start up the first application, causes the first application to transmit a link request to the first system and causes the first system to associate the receiver device information with the first application; the power supply request section causes the first application to transmit the power supply request to the first system; and the second linking processing section causes the first system to associate the receiver device information with the power supply control system.

A twelfth aspect of the present invention is the wireless power supply system according to the ninth aspect, wherein the power transmission processing section controls power transmission of the transmitter device based on power supply setting information in addition to the receiver device information, the power supply setting information being set for each receiver device by the user via the first application and associated with the power supply control system.

A thirteenth aspect of the present invention is the wireless power supply system according to the ninth aspect, further including a power supply management section that acquires power supply status information indicating power supply status of the receiver device as a result of power transmission from the transmitter device; and an output control section that causes the first application to display the power supply status for the receiver device based on the acquired power supply status information.

A fourteenth aspect of the present invention is the wireless power supply system according to the ninth aspect, wherein the power transmission processing section determines a power transmission parameter based on a power transmission policy and controls power transmission of the transmitter device based on the determined power transmission parameter.

A fifteenth aspect of the present invention is the wireless power supply system according to the fourteenth aspect, wherein the power transmission processing section determines the power transmission parameter according to the power transmission policy, based on the receiver device information acquired from the first system.

A sixteenth aspect of the present invention is the wireless power supply system according to the fourteenth aspect, wherein the power transmission processing section determines the power transmission parameter according to the power transmission policy, based on usage status information indicating a service usage status of the user, acquired from the second system corresponding to the second application.

A seventeenth aspect of the present invention is a computer-implemented wireless power supply method, including steps of registering receiver device information with a first system corresponding to a first application that can register a receiver device as a power supply target in wireless power supply, the information being related to a receiver device owned by a user and acquired via the first application; associating the first application with a second application provided to users of a space where a transmitter device for the wireless power supply is installed, based on an operation from the second application; causing an application as a requester of a power supply request to transmit the power supply request to a corresponding system in response to receiving the power supply request from the user via the first application or the second application, the power supply request being for a receiver device indicated by the receiver device information acquired from the first system as a result of the linking; causing a system corresponding to the application as the requester to associate the receiver device information of a receiver device selected as the power supply target, with a power supply control system in response to receiving the power supply request from the application as the requester; and identifying a transmitter device that can transmit power to the receiver device as the power supply target, based on the associated receiver device information and causing the power supply control system to transmit a power transmission request to the identified transmitter device.

An eighteenth aspect of the present invention is a program allowing a computer to register receiver device information with a first system corresponding to a first application that can register a receiver device as a power supply target in wireless power supply, the information being related to a receiver device owned by a user and acquired via the first application; associate the first application with a second application provided to users of a space where a transmitter device for the wireless power supply is installed, based on an operation from the second application; cause an application as a requester of a power supply request to transmit the power supply request to a corresponding system in response to receiving the power supply request from the user via the first application or the second application, the power supply request being for a receiver device indicated by the receiver device information acquired from the first system as a result of the linking; cause a system corresponding to the application as the requester to associate the receiver device information of a receiver device selected as the power supply target, with a power supply control system in response to receiving the power supply request from the application as the requester; and identify a transmitter device that can transmit power to the receiver device as the power supply target, based on the associated receiver device information and cause the power supply control system to transmit a power transmission request to the identified transmitter device.

### [Advantageous Effects of the Invention]

According to the present invention, barriers to user adoption of wireless power supply can be reduced.

### [Brief Description of the Drawings]

Fig. 1 is a diagram illustrating an example of a configuration of a wireless power supply system according to a first embodiment.
Fig. 2 is a block diagram illustrating an example of a functional configuration of a user terminal according to the first embodiment.
Fig. 3 is a block diagram illustrating an example of a functional configuration of a power supply control system according to the first embodiment.
Fig. 4 is a block diagram illustrating an example of a functional configuration of a membership system according to the first embodiment.
Fig. 5 is a diagram illustrating an example of a data configuration of power supply target information according to the first embodiment.
Fig. 6 is a sequence diagram illustrating an example of a processing flow for various types of registration and starting power supply according to the first embodiment.
Fig. 7 is a diagram illustrating examples of the screens for membership registration and menus in a membership application according to the first embodiment.
Fig. 8 is a diagram illustrating examples of the screens for receiver devices registered with the membership application according to the first embodiment.
Fig. 9 is a diagram illustrating examples of the screens for receiver device registration in the membership application according to the first embodiment.
Fig. 10 is a diagram illustrating examples of the login screen and the top screen in the power supply control system according to the first embodiment.
Fig. 11 is a diagram illustrating examples of the screens for receiver devices in the power supply control system according to the first embodiment.
Fig. 12 is a diagram illustrating examples of the screens for transmitter devices in the power supply control system according to the first embodiment.
Fig. 13 is a diagram illustrating an example of a transmission and reception map screen in the power supply control system according to the first embodiment.
Fig. 14 is a diagram illustrating an example of a policy setting screen in the power supply control system according to the first embodiment.
Fig. 15 is a diagram illustrating an example of a configuration of a wireless power supply system according to a second embodiment.
Fig. 16 is a block diagram illustrating an example of a functional configuration of a user terminal according to the second embodiment.
Fig. 17 is a block diagram illustrating an example of a functional configuration of a power supply control system according to the second embodiment.
Fig. 18 is a block diagram illustrating an example of a functional configuration of a membership system according to the second embodiment.
Fig. 19 is a diagram illustrating an example of a data configuration of power supply target information according to the second embodiment.
Fig. 20 is a block diagram illustrating an example of a functional configuration of a receiver device management system according to the second embodiment.
Fig. 21 is a sequence diagram illustrating an example of a processing flow for various types of registration and displaying a registered device list according to the second embodiment.
Fig. 22 is a sequence diagram illustrating an example of a processing flow for starting power supply according to the second embodiment.
Fig. 23 is a sequence diagram illustrating an example of a processing flow for displaying receiver device information according to the second embodiment.
Fig. 24 is a diagram illustrating examples of the screens for membership registration and receiver device registration in a receiver device management application according to the second embodiment.
Fig. 25 is a diagram illustrating examples of the screens for membership registration and application linking in a membership application according to the second embodiment.
Fig. 26 is a diagram illustrating an example of a registered device list screen in the membership application according to the second embodiment.
Fig. 27 is a diagram illustrating examples of the screens for viewing receiver device information in the receiver device management application according to the second embodiment.
Fig. 28 is a diagram illustrating examples of the login screen and the top screen in the power supply control system according to the second embodiment.
Fig. 29 is a diagram illustrating examples of the screens for receiver devices in the power supply control system according to the second embodiment.
Fig. 30 is a diagram illustrating examples of the screens for transmitter devices in the power supply control system according to the second embodiment.
Fig. 31 is a diagram illustrating an example of a transmission and reception map screen in the power supply control system according to the second embodiment.
Fig. 32 is a diagram illustrating an example of a policy setting screen in the power supply control system according to the second embodiment.
Fig. 33 is a sequence diagram illustrating an example of a processing flow for various types of registration and displaying a registered device list according to a modification of the second embodiment.
Fig. 34 is a sequence diagram illustrating an example of a processing flow for starting power supply according to a modification of the second embodiment.
Fig. 35 is a sequence diagram illustrating an example of a processing flow for displaying receiver device information according to a modification of the second embodiment.
Fig. 36 is a diagram illustrating an example of a screen for application linking in a membership application according to a modification of the second embodiment.
Fig. 37 is a diagram illustrating examples of the screens for viewing power supply start and receiver device information in the receiver device management application according to a modification of the second embodiment.

### [Description of the Embodiments]

### (First Embodiment)

Referring to the drawings, a first embodiment of the present invention will be described in detail.

### <1. Configuration of wireless power supply system>

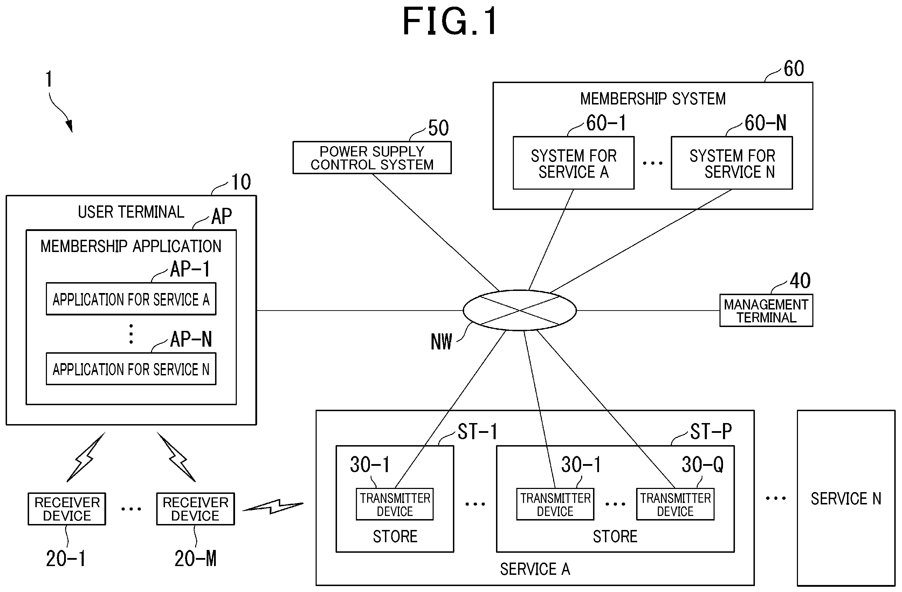

Referring to Fig. 1, a wireless power supply system according to the present embodiment will be described. Fig. 1 is a diagram illustrating an example of a configuration of a wireless power supply system according to the present embodiment. In the following description, power supply performed wirelessly is also referred to as wireless power supply.

A wireless power supply system 1 shown in Fig. 1 provides a service for wireless power supply (hereinafter also referred to as wireless power supply service). The wireless power supply service is provided in a space where a transmitter device for wireless power supply is installed. For example, the space may correspond to stores, factories, etc. in commercial facilities. The space where such wireless power supply service is provided is not limited to these examples, but may be any spaces.

Users can use the wireless power supply service by registering the users' device to which power can be wirelessly supplied (hereinafter also referred to as receiver device) with the wireless power supply service. Users who wish to use the wireless power supply service are required to register in advance a receiver device from an application program (hereinafter may also referred to as application) which has been provided to the space users. In a space where a transmitter device is installed, if a user selects a receiver device from the application, to which the user wishes power to be supplied, power is transmitted to the selected receiver device from the transmitter device. In this way, the user can supply power to the receiver device.

The present embodiment will be described hereinafter taking an example in which the space where transmitter devices for wireless power supply are installed is a store in a commercial facility. The application provided to the users of the store is assumed, as an example, to be an application that can be used by persons who have registered as members of the services provided to the store (hereinafter also referred to as membership application).

For example, the membership application may be an existing application that has been used with the services provided in the store before introduction of the wireless power supply system 1 into the store. A business entity can introduce the wireless power supply system 1 into the store by adding a function for wireless power supply to the existing application.

Therefore, when introducing the wireless power supply system 1 into the store, the business entity no longer has a need to prepare a new application for using the wireless power supply system 1 and can reduce cost (including time) for developing the application. Accordingly, the business entity can easily introduce the wireless power supply system 1.

The number of membership applications is not limited to one, but multiple membership applications may be installed according to the services provided in the store. For example, if Service A offered by Business Entity A and Service B offered by Business Entity B are available, an application for Service A and an application for Service B may be installed. As an example, let us assume a service being a café. In this case, a membership application for Café A run by Business Entity A and a membership application for Café B run by Business Entity B may be provided.

If multiple services are offered by one business entity, the business entity may provide membership applications for the respective services, or may provide an application common to the multiple services. For example, let us assume that Business Entity A runs Café C and Café D belonging to different chains. In this case, Business Entity A may provide different membership applications for Café C and Café D, or may provide a membership application common to Café C and Café D.

If one service is offered at multiple stores, users can use the wireless power supply service at each store using one membership application.

An embodiment will be described hereinafter taking an example in which N business entities (N is a natural number) offer their respective services, and a membership application is provided for each service (i.e., an example in which there are N services and N membership applications).

As shown in Fig. 1, the wireless power supply system 1 includes a user terminal 10, a receiver device 20, a transmitter device 30, a management terminal 40, a power supply control system 50, and a membership system 60. A network NW has a configuration for exchanging information, examples of which include LANs (local area networks), WANs (wide area networks), telephone networks (mobile phone networks, landline networks, etc.), regional IP (Internet protocol) networks, and the Internet.

### (1) User terminal 10

The user terminal 10 is used for the user to use the wireless power supply service. Examples of the user terminal 10 include smartphones, tablets, and PCs (personal computers).

The user terminal 10 is communicably connected to the receiver device 20 via a wireless connection (e.g., Bluetooth (registered trademark), etc.) or a wired connection. Also, the user terminal 10 is communicably connected to the membership system 60 via the network NW.

A screen for the user to use the wireless power supply service is displayed on the user terminal 10 by the membership application. In the store, the user can operate the screen displayed on the user terminal 10 by the membership application so that power can be supplied to the receiver device.

The functions of the membership application may be provided by installing the membership application in the user terminal 10 (i.e., native application), or may be provided by a web system (i.e., web application). In the case of a web application, the membership application is managed by a server, and the functions thereof are provided via the web browser.

Fig. 1 shows an example in which a membership application AP as a native application is installed in the user terminal 10. In the present embodiment, N services are offered and an application is provided for each service. Therefore, N membership applications AP, i.e., an application AP-1 for Service A to an application AP-N for Service N, are installed in the user terminal 10 as the membership application AP.

### (2) Receiver device 20

The receiver device 20 is a device to which power can be wirelessly supplied from a transmitter device. Examples of the receiver device 20 include users' smartphones, tablets, wearable devices, wireless earphones, wireless headphones, and PCs. If the user terminal 10 described above is a terminal to which power can be wirelessly supplied, the user terminal 10 is also one of the receiver devices 20.

The receiver device 20 is not limited to a device owned by a user. For example, the receiver device 20 may be a device installed in a store. Examples of the device installed in a store include electronic shelf labels, electronic tags, and sensor devices.

The receiver device 20 is communicably connected to the user terminal 10 via a wireless or wired connection. Also, the receiver device 20 is communicably connected to a transmitter device 30 via a wireless connection.

Fig. 1 shows an example in which users have M (M is a natural number) receiver devices 20-1 to 20-M. The receiver devices 20-1 to 20-M are each assumed to be able to communicate with the user terminal 10 and a transmitter device 30 via a wireless connection.

In communication with the user terminal 10, the receiver device 20 may transmit, for example, receiver device information. In communication with the transmitter device 30, the receiver device 20 may receive a beacon request and transmit a beacon.

The receiver device information relates to the receiver device 20 owned by the user, that is, information acquired when registering the receiver device. The receiver device registration is performed by the user from the membership application AP. The receiver device information may be acquired from the receiver device 20 by establishing a connection with the user terminal 10, or may be inputted from the membership application AP by the user. Examples of the receiver device information include device name, device type, manufacturer name, product number, and battery information. Examples of the battery information include battery capacity and power supply status. The power supply status corresponds to information that includes, for example, connection frequency with the transmitter device 30, signal strength, power supply duration, and battery level.

The beacon request is a request for a beacon issued to the receiver device 20 as a power supply target. The power supply target is selected by the user from among the receiver devices 20 registered with the membership application AP. The beacon request is transmitted from a transmitter device 30 to a receiver device 20 in order to authenticate that the receiver device 20 as a power supply target is a receiver device 20 to which power can be supplied. Therefore, when a beacon request is received from a transmitter device 30, the receiver device 20 transmits a beacon to the transmitter device 30 in question. If a beacon is received in response to the beacon request, the transmitter device 30 determines that the receiver device 20 as a power supply target is a receiver device 20 to which power can be supplied. The receiver device 20 to which power can be supplied is, in other words, a receiver device 20 which is present within the power transmission range of the transmitter device 30 and to which power can be transmitted from the transmitter device 30.

### (3) Transmitter device 30

The transmitter device 30 can wirelessly supply (transmit) power to receiver devices. Under the control of the power supply control system 50, the transmitter device 30 wirelessly supplies power to at least one receiver device 20 present in the store where the transmitter device 30 is installed

The transmitter device 30 is communicably connected to the power supply control system 50 via the network NW. Also, the transmitter device 30 is communicably connected to receiver devices 20 via a wireless connection.

Fig. 1 shows an installation example of the transmitter device 30 in the stores of Service A. In the example shown in Fig. 1, Service A is offered to P (P is a natural number) stores St-1 to ST-P. In the store ST-1, one transmitter device 30-1 is installed. In the store ST-P, Q (Q is a natural number) transmitter devices 30-1 to 30-Q are installed. If multiple transmitter devices 30 are installed as in the store ST-P, the power supply control system 50 exerts control so that power can be transmitted from a suitable transmitter device 30 to receiver devices 20.

In communication with the power supply control system 50, the transmitter device 30 may, for example, receive a power transmission target notification, a power transmission request, etc. and transmit a power transmission availability notification, etc. In communication with a receiver device 20, the transmitter device 30 may transmit, for example, a beacon request and receive a beacon.

The power transmission target notification includes information that a power transmission request has been received from a user and information on a receiver device 20 as a power supply target, and is given to a transmitter device 30 that can transmit power to the receiver device 20 in question. The transmitter device 30 that can transmit power to the receiver device 20 is a transmitter device 30 with a power transmission range where the receiver device 20 as a power supply target is present.

The power transmission request is a request for power transmission for the receiver device 20 as a power supply target. The power transmission request is transmitted to a transmitter device 30 that is determined to be capable of transmitting power to the receiver device 20 as a power supply target.

The power transmission availability notification is given to the power supply control system 50 to notify that power can be transmitted to the receiver device 20 as a power supply target. For example, if a beacon is received from the receiver device 20 to which a beacon request has been transmitted, the transmitter device 30 may determine that power can be transmitted to the receiver device 20 in question. On the other hand, if a beacon is not received from the receiver device 20 to which a beacon request has been transmitted, the transmitter device 30 may determine that power cannot be transmitted to the receiver device 20 in question.

### (4) Management terminal 40

The management terminal 40 is used for the manager to manage the wireless power supply service. Examples of the management terminal 40 include smartphones, tablets, and PCs. The management terminal 40 is communicably connected to the power supply control system 50 via the network NW.

A screen for the manager to manage the wireless power supply service is displayed on the management terminal 40 by the management application. The manager can operate the screen displayed on the management terminal 40 by the management application to manage the wireless power supply service.

The functions of the management application may be provided by installing the management application in the management terminal 40 (i.e., native application), or may be provided by a web system (i.e., web application). In the case of a web application, the management application is managed by a server, and the functions thereof are provided via the web browser.

### (5) Power supply control system 50

The power supply control system 50 controls power supply from a transmitter device to receiver devices. For example, the power supply control system 50 may be configured by at least one server (e.g., cloud server). The power supply control system 50 is communicably connected to the transmitter device 30, the management terminal 40, and the membership system 60 via the network NW.

The power supply control system 50 also executes processing related to power supply management information which is related to power supply management in the wireless power supply system 1. Examples of the power supply management information include information on business entities (companies) using the wireless power supply system 1, power transmission information related to the transmitter devices 30 owned by the business entities, and receiver device information related to the receiver devices 20 to which power has been supplied in the stores of the business entities.

The business entity information includes account information of the business entities, account information of the managers in charge of management in the business entities, and store information related to the store owned by the business entities.

For example, the power transmission information related to the transmitter devices 30 owned by the business entities may indicate the number of devices installed at all stores or at each store, the number of devices in operation, installation locations, power transmission ranges, power transmission statuses, and whether alerts have been issued. The installation locations and the power transmission ranges may be visually indicated in a map, for example. For example, the power transmission statuses may correspond to information including connection frequencies with the receiver devices 20, signal conditions, power supply durations, and amounts of power transmission. For example, the power transmission statuses may be provided in the form of a graph showing the relationship between power transmission durations and amounts of power transmission.

The receiver device information related to receiver devices 20 to which power has been supplied in the stores owned by the business entities may indicate, for example, the number of devices installed at all stores or at each store, the number of devices currently being supplied with power, power supply locations, power supply statuses, and whether alerts have been issued. The power supply locations may be visually indicated in a map, for example. For example, the power supply statuses may be provided in the form of a graph showing the relationship between power supply durations and amounts of power supply.

### (6) Membership system 60

The membership system 60 manages the users of the membership application. For example, the membership system 60 may be configured by at least one server (e.g., cloud server). The membership system 60 is communicably connected to the user terminal 10, and the power supply control system 50 via the network NW.

The membership system 60 corresponds to the membership application AP. Therefore, if there are multiple membership applications AP, there are also multiple membership systems 60. Fig. 1 shows an example in which there are N membership applications AP. Therefore, there are N membership systems 60, i.e., a system 60-1 for Service A to a system 60-N for Service N.

### <2. Functional configuration of user terminal>

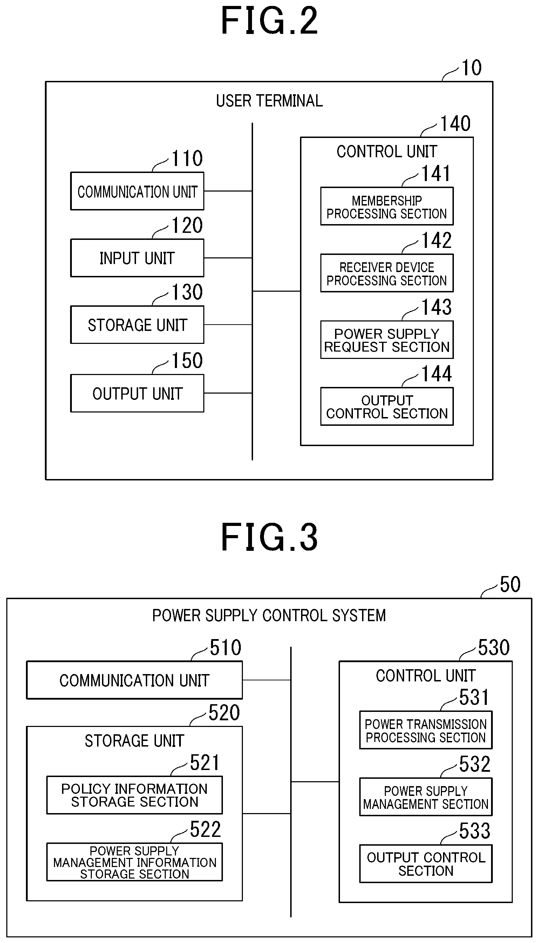

The configuration of the wireless power supply system 1 according to the present embodiment has been described. Referring now to Fig. 2, a functional configuration of the user terminal 10 according to the present embodiment will be described. Fig. 2 is a block diagram illustrating an example of a functional configuration of the user terminal 10 according to the present embodiment.

As shown in Fig. 2, the user terminal 10 includes a communication unit 110, an input unit 120, a storage unit 130, a control unit 140, and an output unit 150.

### (1) Communication unit 110

The communication unit 110 has a function of transmitting and receiving various types of information. In communication with the receiver device 20, the communication unit 110 may receive, for example, receiver device information. In communication with the membership system 60, the communication unit 110 may transmit, for example, membership information, receiver device information, power supply setting information, power supply requests, etc.

The membership information relates to the user using the wireless power supply service, that is, information acquired when registering as a member. The membership registration is performed by the user from the membership application AP. The membership information is inputted by the user from the membership application AP. Examples of the membership information include name, email address, address, date of birth, and main area of use.

The power supply setting information relates to settings of power supply for the receiver device 20 owned by the user, that is, information acquired when registering settings. The setting registration is performed by the user from the membership application AP. The power supply setting information is inputted by the user from the membership application AP. Examples of the power supply setting information include power supply conditions, and priorities.

Examples of the power supply conditions include conditions set in the automatic power supply settings and conditions set in the power supply stop settings. For example, the conditions set in the automatic power supply settings may include a battery capacity (battery level). Thus, for example, if the battery capacity of the receiver device 20 falls below the set battery capacity, power supply is automatically started for the receiver device 20 in question. Examples of the conditions set in the power supply stop settings include a battery capacity (battery level), and power supply duration. Thus, for example, if the battery capacity of the receiver device 20 falls below the set battery capacity, or if the power supply duration for the receiver device 20 exceeds the set power supply duration, power supply to the receiver device 20 in question may be automatically stopped.

For example, the priority may be set in the power supply priority settings. For example, the priority set in the power supply priority settings may be a priority order of power supply among multiple receiver devices 20 registered. The priority order is set in the order of how much of a problem would be caused if the battery capacity ran out. For example, if the registered receiver devices 20 are smartphones and headphones, the priority order is set so that the smartphones take priority over the headphones.

The power supply request is a request for power supply for the receiver device 20 as a power supply target. The power supply target is selected by the user from among the receiver devices 20 registered with the membership application AP.

### (2) Input unit 120

The input unit 120 has a function of accepting input from users. For example, the input unit 120 may be configured by an input device, such as buttons, touch panel, microphone, mouse, and keyboard, included as hardware in the user terminal 10.

The input unit 120 accepts input, such as membership registration operations, receiver device registration operations, setting operations, and power supply start operations, via the membership application AP. The input unit 120 accepts registration of membership information in response to the membership registration operations. The input unit 120 accepts registration of receiver device information in response to the receiver device registration operations. The input unit 120 accepts registration of power supply settings in response to the setting operations. The input unit 120 accepts a power supply request from the user in response to the power supply start operations.

### (3) Storage unit 130

The storage unit 130 has a function of storing various types of information. The storage unit 130 is configured by a storage medium, such as HDD (hard disk drive), SSD (solid state drive), flash memory, EEPROM (electrically erasable programmable read only memory), RAM (random access read/write memory), ROM (read only memory), or any combination of these storage media, included as hardware in the user terminal 10.

For example, the storage unit 130 may store the membership application AP installed in the user terminal 10, the information inputted to the membership application, etc.

### (4) Control unit 140

The control unit 140 has a function of controlling the overall operations of the user terminal 10. The control unit 140 may be achieved, for example, by allowing the CPU (central processing unit) included as hardware in the user terminal 10 to execute programs.

As shown in Fig. 2, the control unit 140 includes a membership processing section 141, a receiver device processing section 142, a power supply request section 143, and an output control section 144.

### (4-1) Membership processing section 141

The membership processing section 141 has a function of performing processing related to membership. For example, when membership registration operations are accepted by the input unit 120, the membership processing section 141 may perform membership registration processing for registering membership information with the membership system 60. In the membership registration processing, the membership processing section 141 may cause the membership application AP to transmit the membership information acquired in response to the user's membership registration operations to the membership system 60 via the communication unit 110 and cause the membership system 60 to register the membership information.

### (4-2) Receiver device processing section 142

The receiver device processing section 142 has a function of performing processing related to the receiver device 20. For example, when receiver device registration operations are accepted by the input unit 120, the receiver device processing section 142 may perform receiver device registration processing for registering receiver device information with the membership system 60. In the receiver device registration processing, the receiver device processing section 142 may cause the membership application AP to transmit the receiver device information acquired in response to the user's receiver device registration operations to the membership system 60 via the communication unit 110 and cause the membership system 60 to register the receiver device information.

Also, when setting operations are accepted by the input unit 120, the receiver device processing section 142 may perform setting registration processing for registering power supply setting information with the membership system 60. In the setting registration processing, the receiver device processing section 142 may cause the membership application AP to transmit the power supply setting information acquired in response to the user's setting operations to the membership system 60 via the communication unit 110 and cause the membership system 60 to register the power supply setting information.

### (4-3) Power supply request section 143

The power supply request section 143 has a function of performing processing related to power supply requests. For example, when power supply start operations are accepted by the input unit 120, the power supply request section 143 may perform power supply request processing for transmitting a power supply request to the membership system 60. In the power supply request processing, the power supply request section 143 may cause the membership application AP to transmit a power supply request to the membership system 60 via the communication unit 110.

### (4-4) Output control section 144

The output control section 144 has a function of controlling output of various types of information. For example, the output control section 144 may cause the output unit 150 to display a screen of the membership application AP.

### (5) Output unit 150

The output unit 150 has a function of outputting various types of information. For example, the output unit 150 is configured by an output device, e.g., a display device such as a display and a touch screen (touch panel) and an audio output device such as a speaker, included as hardware in the user terminal 10.

For example, the output unit 150 may display a screen of the membership application AP on the display device under the control of the control section 144.

### <3. Functional configuration of power supply control system>

The functional configuration of the user terminal 10 according to the present embodiment has been described. Referring to Fig. 3, a functional configuration of the power supply control system 50 according to the present embodiment will be described. Fig. 3 is a block diagram illustrating an example of a functional configuration of the power supply control system 50 according to the present embodiment.

As shown in Fig. 3, the power supply control system 50 includes a communication unit 510, a storage unit 520, and a control unit 530.

### (1) Communication unit 510

The communication unit 510 has a function of transmitting and receiving various types of information. In communication with a transmitter device 30, the communication unit 510 may transmit, for example, a power transmission target notification, a power transmission request, etc. and receive a power transmission availability notification, etc. In communication with the management terminal 40, the communication unit 510 may transmit, for example, power supply management information, etc. In communication with the membership system 60, the communication unit 510 receives information (e.g., receiver device information or power supply setting information), etc. related to power transmission targets.

### (2) Storage unit 520

The storage unit 520 has a function of storing various types of information. The storage unit 520 is configured by a storage medium, such as HDD, SSD, flash memory, EEPROM, RAM, ROM, and any combination of these media, included as hardware in the power supply control system 50.

As shown in Fig. 3, the storage unit 520 includes a policy information storage section 521, and a power supply management information storage section 522.

### (2-1) Policy information storage section 521

The policy information storage section 521 has a function of storing policy information. The policy information includes policy for the transmitter device 30 to transmit power to receiver devices 20 (hereinafter also referred to as power transmission policy). The power transmission policy includes settings such as a method of determining priority of power supply and amount of power transmitted. For example, priority of power supply and amount of power transmitted may be determined according to the receiver device information of the receiver devices 20 located within the power transmission range of the transmitter device 30.

### (2-2) Power supply management information storage section 522

The power supply management information storage section 522 has a function of storing power supply management information. The power supply management information storage section 522 stores power supply management information generated in the processing of a power supply management section 532 described later.

### (3) Control unit 530

The control unit 530 has a function of controlling the overall operations of the power supply control system 50. For example, the control unit 530 may be achieved by causing the CPU included as hardware in the power supply control system 50 to execute programs.

As shown in Fig. 3, the control unit 530 includes a power transmission processing section 531, a power supply management section 532, and an output control section 533.

### (3-1) Power transmission processing section 531

The power transmission processing section 531 has a function of performing processing related to power transmission. Based on the information related to power transmission targets associated by the membership system 60, the power transmission processing section 531 identifies a transmitter device 30 from which power can be transmitted to a receiver device 20 as a power supply target and causes the power supply control system 50 to transmit a power transmission request to the identified transmitter device 30. For this purpose, the power transmission processing section 531 may perform, for example, power transmission target notification processing, power transmission parameter determination processing, power transmission request processing, etc.

The information related to power transmission targets may include at least receiver device information and may further include power supply setting information. In other words, the power transmission processing section 531 may control power transmission performed by the transmitter devices 30 based on at least the receiver device information, or may control power transmission performed by the transmitter devices 30 based on the receiver device information and the power supply setting information.

When information related to a power transmission target is associated by the membership system 60, the power transmission processing section 531 performs the power transmission target notification processing.

The power transmission target notification processing will be described in detail. Based on the receiver device information received from the membership system 60 by the communication unit 510, the power transmission processing section 531 identifies a transmitter device 30 from which power can be transmitted to the receiver device 20 as a power supply target. First, the power transmission processing section 531 identifies the store where the receiver device 20 as a power supply target indicated by the receiver device information is present. Next, from among the transmitter devices 30 installed in the identified store, the power transmission processing section 531 identifies a transmitter device 30 having a power transmission range where the receiver device 20 as a power supply target is present. After identification, the power transmission processing section 531 causes the power supply control system 50 to transmit a power transmission target notification to the identified transmitter device 30 via the communication unit 510.

When the communication unit 510 receives a power transmission availability notification from the transmitter device 30 and if the power transmission availability notification indicates power transmission as being possible, the power transmission processing section 531 performs the power transmission parameter determination processing.

The power transmission parameter determination processing will be described in detail. The power transmission processing section 531 determines power transmission parameters based on the power transmission policy and controls power transmission of the transmitter device 30 based on the determined power transmission parameters. First, the power transmission processing section 531 acquires policy information corresponding to the receiver device 20 as a power supply target indicated by the receiver device information, from the policy information storage section 521. Next, the power transmission processing section 531 determines power transmission parameters according to the power transmission policy indicated by the policy information, based on the receiver device information. For example, the power transmission processing section 531 may make a comparison with the receiver device information of other receiver devices 20 as power supply targets and determine priority of power transmission as a power transmission parameter according to the power supply status of each receiver device 20. As an example, the power transmission processing section 531 may adjust the order of power transmission or the amount of power transmitted so that the receiver device 20 having a lower battery level than other receiver devices 20 can be supplied with power preferentially and then determine a transmission parameter.

When determining power transmission parameters, the power supply setting information may be referred to. The power supply status of each receiver device 20 can be obtained from the power supply management information stored in the power supply management information storage section 522.

After performing the power transmission parameter determination processing, the power transmission processing section 531 performs the power transmission request processing.

The power transmission request processing will be described in detail. First, the power transmission processing section 531 generates a power transmission request so that power is transmitted according to the power transmission parameters determined during power transmission parameter determination processing. Next, the power transmission processing section 531 transmits the power transmission request, via the communication unit 510, to the transmitter device 30 from which power can be transmitted to the receiver device 20 as a power supply target.

### (3-2) Power supply management section 532

The power supply management section 532 has a function of managing power supply to receiver devices 20 from transmitter devices 30. For example, the power supply management section 532 may update the power supply management information stored in the power supply management information storage section 522, based on the power supply statuses indicated in the receiver device information received from the membership system 60 by the communication unit 510, the power transmission statuses obtained by controlling power transmission of the transmitter devices 30, etc.

Also, the power supply management section 532 may acquire power supply status information indicating the power supply statuses of the receiver devices 20 as a result of power transmission from the transmitter devices 30. For example, the power supply management section 532 may generate power supply status information indicating connection frequency, signal conditions, power supply duration, battery level, etc., based on the power supply statuses indicated by the receiver device information and the power transmission statuses indicated by the transmitter device information.

### (3-3) Output control section 533

The output control section 533 has a function of controlling output of various types of information. For example, the output control section 533 may cause the management terminal 40 to display a management screen based on power supply management information.

The output control section 533 may cause the membership application AP to display the power supply statuses of a receiver devices 20, based on the power supply status information acquired by the power supply management section 532.

If the power transmission processing section 531 determines power transmission from the transmitter device 30 to the receiver device 20 as not being possible, the output control section 533 causes the membership application AP to display an alert notification indicating accordingly.

### <4. Functional configuration of membership system>

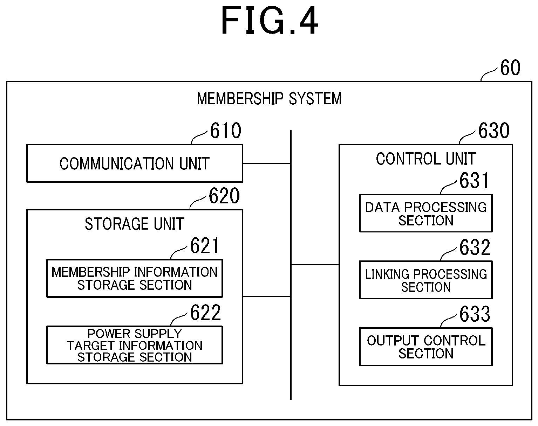

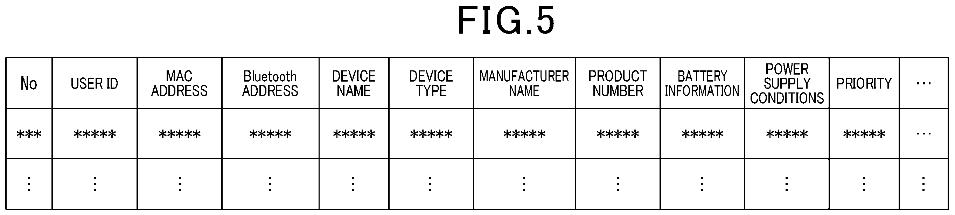

The functional configuration of the power supply control system 50 according to the present embodiment has been described. Subsequently, referring to Figs. 4 and 5, a functional configuration of the membership system 60 according to the present embodiment will be described. Fig. 4 is a block diagram illustrating an example of a functional configuration of the membership system 60 according to the present embodiment.

As shown in Fig. 4, the membership system 60 includes a communication unit 610, a storage unit 620, and a control unit 630.

### (1) Communication unit 610

The communication unit 610 has a function of transmitting and receiving various types of information. In communication with the user terminal 10, the communication unit 610 may receive, for example, membership information, receiver device information, power supply setting information, power supply requests, etc. In communication with the power supply control system 50, the communication unit 610 transmits information (e.g., receiver device information or power supply setting information), etc. related to power transmission targets.

### (2) Storage unit 620

The storage unit 620 has a function of storing various types of information. The storage unit 620 is configured by a storage medium, such as HDD, SSD, flash memory, EEPROM, RAM, ROM, and any combination of these media, included as hardware in the membership system 60.

As shown in Fig. 4, the storage unit 620 includes a membership information storage section 621, and a power supply target information storage section 622.

### (2-1) Membership information storage section 621

The membership information storage section 621 has a function of storing membership information. The membership information storage section 621 stores membership information received from the user terminal 10 by the communication unit 610.

### (2-2) Power supply target information storage section 622

The power supply target information storage section 622 has a function of storing power supply target information. The power supply target information relates to power supply targets and may include, for example, information in which the membership information, receiver device information, and power supply setting information are correlated with each other.

Referring now to Fig. 5, a data configuration of the power supply target information according to the present embodiment will be described. Fig. 5 is a diagram illustrating an example of a data configuration of the power supply target information according to the present embodiment.

For example, as shown in Fig. 5, the power supply target information may include data, such as No., user ID, MAC address, Bluetooth address, device name, device type, manufacturer name, product number, battery information, power supply conditions, and priority.

### (3) Control unit 630

The control unit 630 has a function of controlling the overall operations of the membership system 60. For example, the control unit 630 may be achieved by causing the CPU included as hardware in the membership system 60 to execute programs.

As shown in Fig. 4, the control unit 630 includes a data processing section 631, a linking processing section 632, and an output control section 633.

### (3-1) Data processing section 631

The data processing section 631 has a function of performing data processing. For example, the data processing section 631 may perform registration processing of data received from the user terminal 10 by the communication unit 610. The data targeted to registration processing include membership information, receiver device information, and power supply setting information.

### (3-2) Linking processing section 632

The linking processing section 632 has a function of performing linking processing of data. For example, when the communication unit 610 accepts a power supply request from the user terminal 10 (membership application AP), the link processing section 632 may associate (transmit) the power supply target information with (to) the power supply control system 50.

The linking processing section 632 may associate at least the receiver device information of the receiver device 20 as a power supply target with the power supply control system 50. Specifically, the linking processing section 632 may acquire receiver device information from the power supply target information storage section 622, for the receiver device 20 selected as a power supply target indicated in the power supply request. After acquisition, the linking processing section 632 may cause the membership system 60 to associate the acquired receiver device information with the power supply control system 50 via the communication unit 610.

If power supply setting information is set for the receiver device 20 as a power supply target, the linking processing section 632 may also acquire the power supply setting information correlated with the receiver device information from the power supply target information storage section 622. After acquisition, the linking processing section 632 may cause the membership system 60 to associate the acquired receiver device information and the power supply setting information with the power supply control system 50 via the communication unit 610.

### (3-3) Output control section 633

The output control section 633 has a function of controlling output of various types of information. For example, the output control section 633 may cause the user terminal 10 to display a screen for the membership application AP.

### <5. Processing flow>

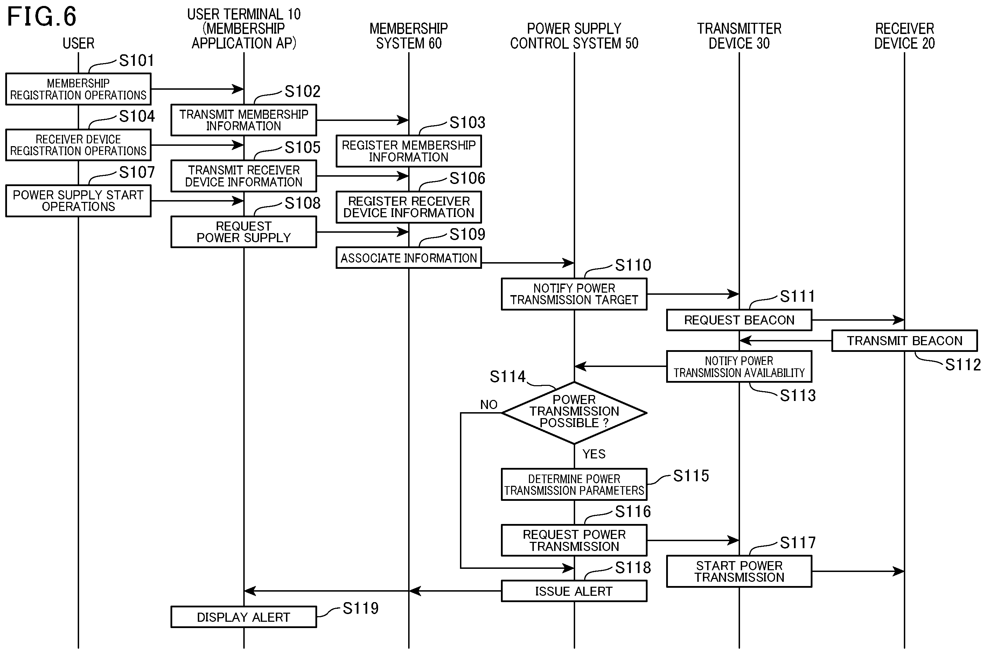

The functional configuration of the membership system 60 according to the present embodiment has been described. Referring to Fig. 6, a processing flow according to the present embodiment will be described. Fig. 6 is a sequence diagram illustrating an example of a processing flow for various types of registration and starting power supply according to the present embodiment.

As shown in Fig. 6, first, the user performs membership registration operations on the user terminal 10 (step S101). Specifically, the user starts up the membership application AP on the user terminal 10 and inputs membership information on the membership registration screen displayed by the membership application AP to register as a member.

In response to the membership registration operations, the membership processing section 141 of the user terminal 10 transmits the membership information to the membership system 60 (step S102). Specifically, in the membership registration processing, the membership processing section 141 acquires the membership information inputted by the user and causes the membership application AP to transmit the membership information to the membership system 60 via the communication unit 110 for registration.

The data processing section 631 of the membership system 60 registers the membership information from the user terminal 10 (step S103). Specifically, the data processing section 631 causes the membership information storage section 621 to store the membership information received from the user terminal 10 by the communication unit 610.

Next, the user performs receiver device registration operations on the user terminal 10 (step S104). Specifically, the user inputs receiver device information on the receiver device registration screen displayed on the user terminal 10 by the membership application AP to register as a receiver device.

In response to the receiver device registration operations, the receiver device processing section 142 of the user terminal 10 transmits receiver device information to the membership system 60 (step S105). Specifically, in the receiver device registration processing, the receiver device processing section 142 acquires the receiver device information inputted by the user and causes the membership application AP to transmit the receiver device information to the membership system 60 via the communication unit 110 for registration.

The data processing section 631 of the membership system 60 registers the receiver device information from the user terminal 10 (step S106). Specifically, the data processing section 631 causes the power supply target information storage section 622 to store the receiver device information received from the user terminal 10 by the communication unit 610.

Next, the user performs power supply start operations on the user terminal 10 (step S107). Specifically, the user selects a receiver device 20 as a power supply target on the power supply start screen displayed on the user terminal 10 by the membership application AP and provides a power supply request.

In response to the power supply start operations, the power supply request section 143 of the user terminal 10 transmits a power supply request to the membership system 60 (step S108). Specifically, in the power supply request processing, the power supply request section 143 causes the membership application AP to transmit a power supply request to the membership system 60 via the communication unit 110, for the receiver device 20 selected in response to the power supply start operations inputted by the user.

The link processing section 632 of the membership system 60 associates the power supply target information with the power supply control system 50 (step S109). Specifically, the linking processing section 632 acquires corresponding power supply target information from the power supply target information storage section 622, for the receiver device 20 as a power supply target indicated by the power supply request received from the user terminal 10 by the communication unit 610 and causes the membership system 60 to associate (transmit) the acquired information with (to) the power supply control system 50 via the communication unit 610.

The power transmission processing section 531 of the power supply control system 50 transmits a power transmission target notification to a transmitter device 30 (step S110). Specifically, based on the power supply target information received from the membership system 60 by the communication unit 510, the power transmission processing section 531 identifies a transmitter device 30 from which power can be transmitted to the receiver device 20 as a power supply target and causes the power supply control system 50 to transmit a power transmission target notification to the transmitter device 30 via the communication unit 510.

The transmitter device 30 transmits a beacon request to the receiver device 20 as a power supply target (step S111). Specifically, based on the power transmission target notification received from the power supply control system 50, the transmitter device 30 identifies the receiver device 20 as a power supply target and transmits a beacon request to the identified receiver device 20.

The receiver device 20 transmits a beacon to the transmitter device 30 (step S112). Specifically, when a beacon request is received from a transmitter device 30, the receiver device 20 transmits a beacon to the transmitter device 30 in question.

The transmitter device 30 transmits a power transmission availability notification to the power supply control system 50 (step S113). Specifically, if a beacon is received from the receiver device 20, the transmitter device 30 determines power transmission to the receiver device 20 as a power supply target as being possible and transmits a power transmission availability notification indicating power transmission as being possible to the power supply control system 50. On the other hand, if no beacon is received from the receiver device 20, the transmitter device 30 determines power transmission to the receiver device 20 as a power supply target as not being possible and transmits a power transmission availability notification indicating power transmission as not being possible to the power supply control system 50.

Based on the power transmission availability notification received from the transmitter device 30 by the communication unit 510, the power transmission processing section 531 of the power supply control system 50 determines whether power can be transmitted from the transmitter device 30 to the receiver device 20 (step S114). If power transmission is possible (YES at step S114), processing proceeds to step S115. On the other hand, if power transmission is not possible (NO at step S114), processing proceeds to step S118.

When processing proceeds to step S115, the power transmission processing section 531 determines power transmission parameters (step S115). Specifically, the power transmission processing section 531 acquires policy information corresponding to the receiver device 20 as a power supply target from the policy information storage section 521 and determines power transmission parameters according to the power transmission policy indicated by the policy information, based on the power supply target information that has been received from the membership system 60.

After determining power transmission parameters, the power transmission processing section 531 transmits a power transmission request to the transmitter device 30 (step S116). Specifically, the power transmission processing section 531 generates a power transmission request corresponding to the determined power transmission parameters and causes the power supply control system 50 to transmit the power transmission request to the transmitter device 30 via the communication unit 510.

The transmitter device 30 that has received the power transmission request starts power transmission to the receiver device 20 (step S117). Specifically, the transmitter device 30 transmits power to the receiver device 20, while adjusting the power transmission parameters based on the power transmission request received from the power supply control system 50.

When processing proceeds to step S118, the output control section 533 of the power supply control system 50 transmits an alert notification to the user terminal 10 via the communication unit 510 and via the membership system 60 (step S118).

The user terminal 10 that has received the alert notification causes the membership application AP to display the alert (step S119).

The user may perform power supply setting at any timing, for the receiver device 20 as a power supply target. In this case, similarly to the registration of a receiver device 20, the user may perform operations for registering power supply setting information, the user terminal 10 (membership application AP) may transmit the power supply setting information, and the membership system 60 may register the power supply setting information.

### <6. Screen examples>

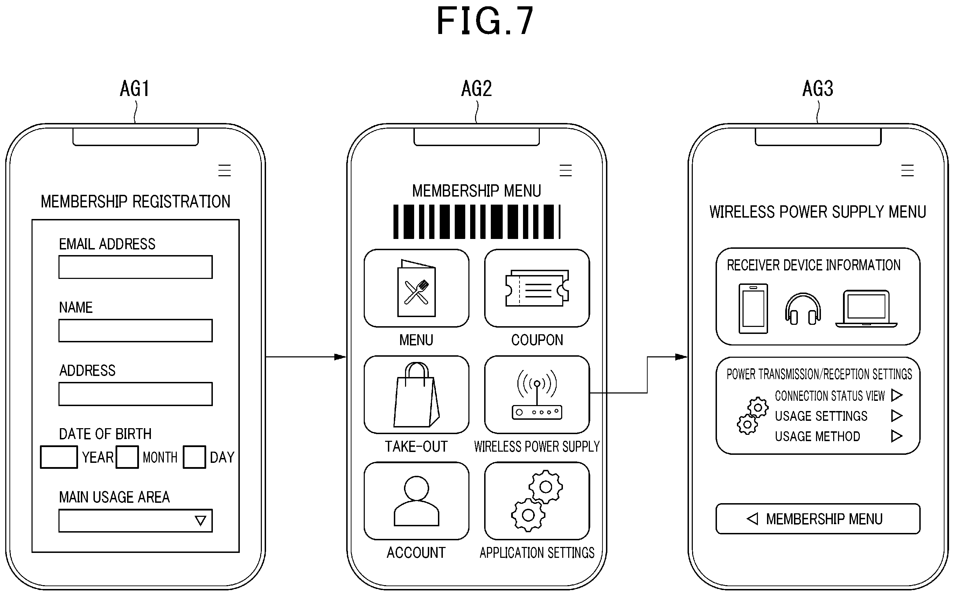

The processing flow according to the present embodiment has been described. Referring to Figs. 7 to 14, screen examples according to the present embodiment will be described.

### (1) Screen examples for membership application

Referring to Figs. 7 to 9, screen examples for the membership application AP will be described.

### (1-1) Screens for membership registration and menus

Referring to Fig. 7, screens for membership registration and menus for the membership application AP will be described. Fig. 7 is a diagram illustrating examples of the screens for membership registration and menus for the membership application AP according to the present embodiment. Fig. 7 shows a membership registration screen AG1, a membership menu screen AG2, and a wireless power supply menu screen AG3.

The membership registration screen AG1 is a screen for membership registration. The membership registration screen AG1 is displayed on the user terminal 10 by the membership application AP during membership registration processing. The user can register as a member by inputting membership information on the membership registration screen AG1 displayed on the user terminal 10.

The membership menu screen AG2 shows a menu for services. The membership menu screen AG2 is displayed on the user terminal 10 by the membership application AP after membership registration. The membership menu screen AG2 displays a Wireless Power Supply menu item. The Wireless Power Supply menu item is displayed on an existing menu screen as a result of adding a function for wireless power supply to an existing membership application AP. The user can use wireless power supply by selecting the Wireless Power Supply menu item on the membership menu screen AG2.

The wireless power supply menu screen AG3 shows a menu for wireless power supply. The wireless power supply menu screen AG3 is displayed on the user terminal 10 by the membership application AP when the Wireless Power Supply menu item is selected on the membership menu screen AG2. The user can register a receiver device 20, can view receiver device information, can receive power supply, etc. by selecting the Receiver Device Information item on the wireless power supply menu screen AG3. Also, the user can view connection status with the transmitter device 30, can view usage settings and usage method, etc. by selecting the Power Transmission and Reception Settings item on the wireless power supply menu screen AG3.

### (1-2) Screen for registered receiver devices

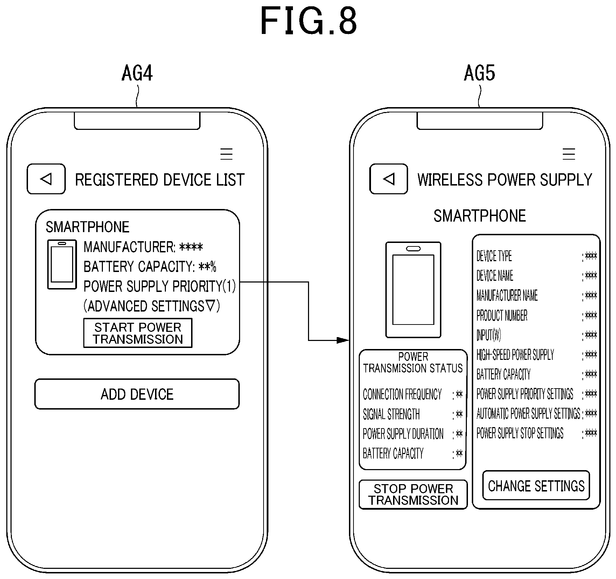

Referring to Fig. 8, the screen for receiver devices 20 registered with the membership application AP will be described. Fig. 8 is a diagram illustrating examples of the screens for receiver devices 20 registered with the membership application AP according to the present embodiment. Fig. 8 shows a registered device list screen AG4, and a wireless power supply screen AG5.

The registered device list screen AG4 displays a list of registered receiver devices 20. The registered device list screen AG4 is displayed on the user terminal 10 by the membership application AP when the Receiver Device Information item is selected on the wireless power supply menu screen AG3. The user can start power transmission (power supply) to the receiver device 20 by selecting the Start Power Transmission item on the registered device list screen AG4. Also, the user can register a new receiver device 20 by selecting the Add Device item on the registered device list screen AG4.

The wireless power supply screen AG5 displays detailed information related to a registered receiver device 20. The wireless power supply screen AG5 is displayed on the user terminal 10 by the membership application AP when the Advanced Settings item is selected on the registered device list screen AG4. The user can view receiver device information, power supply setting information, power transmission status, etc. of a registered receiver device 20 on the wireless power supply screen AG5. Also, the user can change power supply settings by selecting the Change Settings item on the wireless power supply screen AG5. Furthermore, the user can stop power transmission to the receiver device 20 by selecting the Stop Power Supply item on the wireless power supply screen AG5.

### (1-3) Screens for receiver device registration

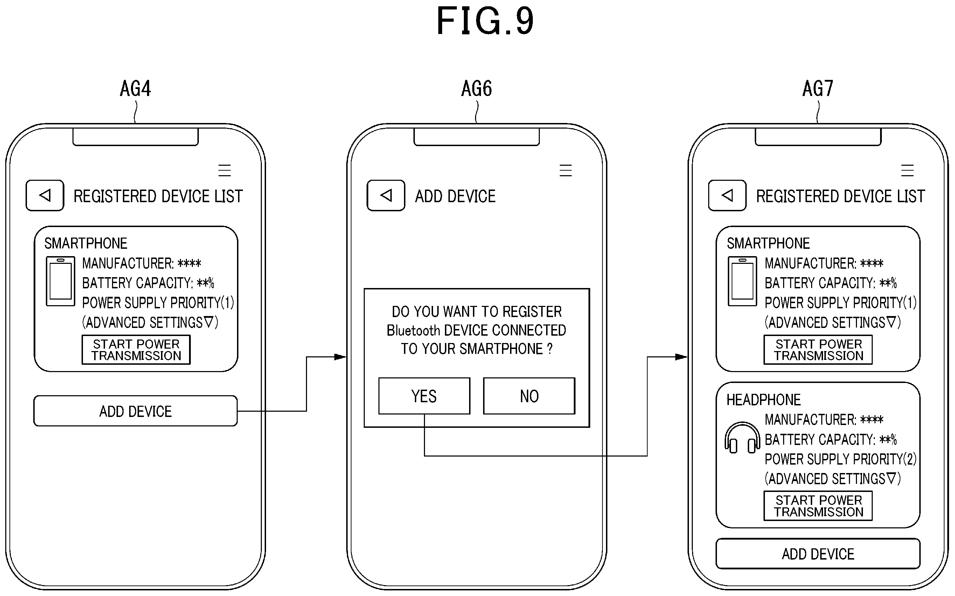

Referring to Fig. 9, screens for receiver device registration for the membership application AP will be described. Fig. 9 is a diagram illustrating examples of the screens for receiver device registration for the membership application AP according to the present embodiment. Fig. 9 shows a registered device list screen AG4, a device addition screen AG6, and a registered device list screen AG7. Since the registered device list screen AG4 shown in Fig. 9 is the same as the registered device list screen AG4 shown in Fig. 8, description thereof will be omitted.

The device addition screen AG6 is a screen for registering (adding) a receiver device 20. The device addition screen AG6 is displayed on the user terminal 10 by the membership application AP when the Add Device item is selected on the registered device list screen AG4. The user can select on the device addition screen AG6 whether to register the receiver device 20 connected to the user terminal 10.

The registered device list screen AG7 is displayed after addition of a receiver device 20. The registered device list screen AG4 shown in Figs. 8 and 9 has displayed only the information on a smartphone. The registered device list screen AG7 shown in Fig. 9 further displays the information on a headphone additionally registered by the user.

### (2) Screen examples for power supply control system

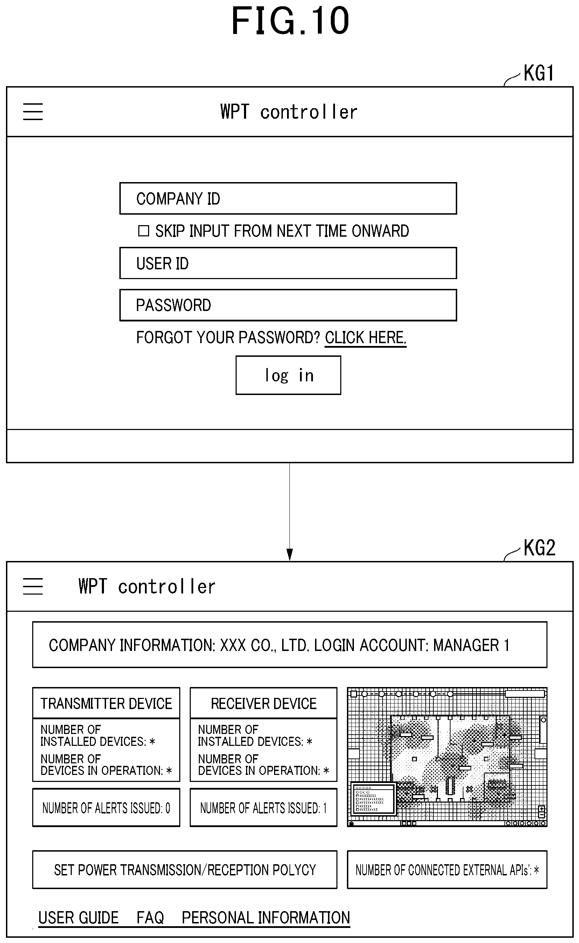

Referring to Figs. 10 to 14, screen examples for the power supply control system 50 will be described. The screens for the power supply control system 50 may be, for example, a management screen displayed on the management terminal 40.

### (2-1) Login screen and top screen

Referring to Fig. 10, a login screen and a top screen for the power supply control system 50 will be described. Fig. 10 is a diagram illustrating examples of the login screen and the top screen for the power supply control system 50 according to the present embodiment. Fig. 10 shows a login screen KG1 and a top screen KG2.

The login screen KG1 is a screen for the manager to log in to the power supply control system 50. The login screen KG1 is displayed on the management terminal 40 by the management application in response to the operations from the manager. By inputting the manager information (e.g., company ID, user ID, and password) on the login screen KG1 displayed on the management terminal 40, the manager can log in to the power supply control system 50.

The top screen KG2 relates to management of the wireless power supply system 1. The top screen KG2 is displayed on the management terminal 40 by the management application after logging in. The top screen KG2 displays items related to user information, receiver devices 20, transmitter devices 30, power transmission and reception policy settings, number of connections of external APIs (application programming interfaces), store map, etc. The manager can select items related to various types of information on the top screen KG2 to view details of the selected information.

### (2-2) Screens for receiver devices

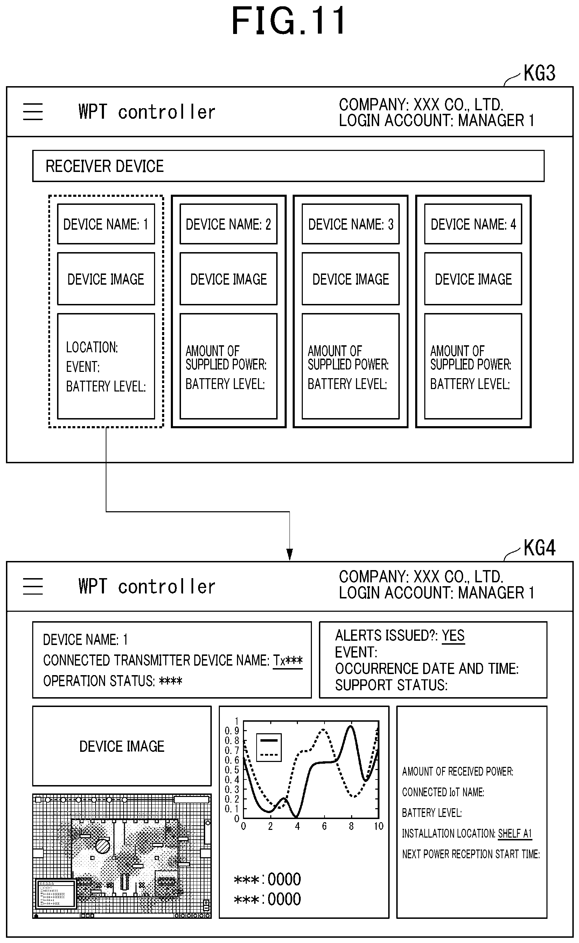

Referring to Fig. 11, screens for receiver devices 20 for the power supply control system 50 will be described. Fig. 11 is a diagram illustrating examples of the screens for receiver devices 20 for the power supply control system 50 according to the present embodiment. Fig. 11 shows a receiver device list screen KG3 and a receiver device details screen KG4.

The receiver device list screen KG3 displays a list of the receiver devices 20 currently using the wireless power supply service in the stores managed by the manager. The receiver device list screen KG3 is displayed on the management terminal 40 by the management application when the item related to receiver devices 20 is selected on the top screen KG2. The manager can select the item related to each receiver device 20 on the receiver device list screen KG3 to view details of the selected receiver device 20.

The receiver device details screen KG4 displays details of a receiver device 20. The receiver device details screen KG4 is displayed on the management terminal 40 by the management application when the item related to a receiver device 20 is selected on the receiver device list screen KG3. The receiver device details screen KG4 displays the receiver device information, power supply status, whether alerts have been issued, etc. The power supply status may be displayed as a map or graph.

### (2-3) Screens for transmitter devices

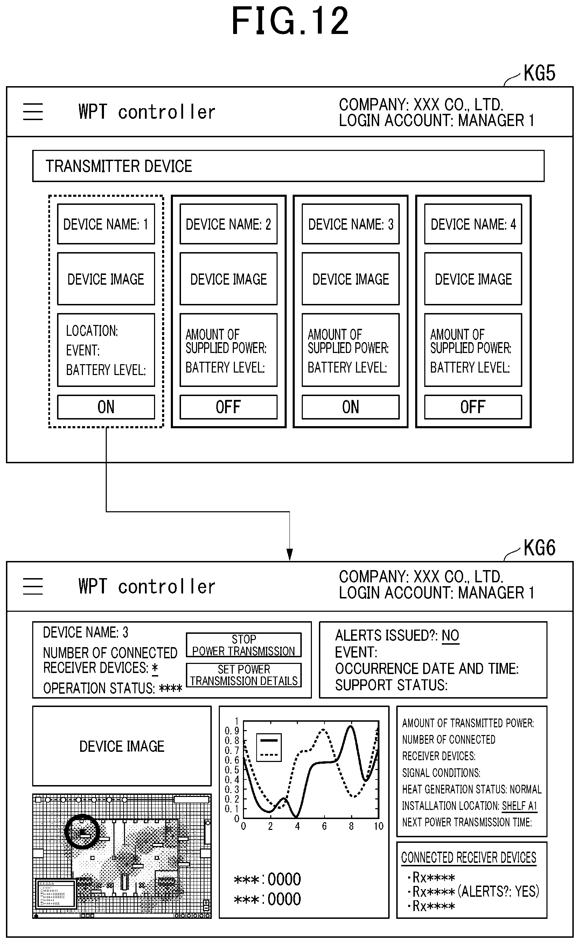

Referring to Fig. 12, screens for transmitter devices 30 for the power supply control system 50 will be described. Fig. 12 is a diagram illustrating examples of the screens for transmitter devices 30 for the power supply control system 50 according to the present embodiment. Fig. 12 shows a transmitter device list screen KG5 and a transmitter device details screen KG6.

The transmitter device list screen KG5 displays a list of the transmitter devices 30 installed in the stores managed by the manager. The transmitter device list screen KG5 is displayed on the management terminal 40 by the management application when the item related to a transmitter device 30 is selected on the top screen KG2. The manager can select the item related to each transmitter device 30 on the transmitter device list screen KG5 to view details of the selected transmitter device 30.

The transmitter device details screen KG6 displays details of a transmitter device 30. The transmitter device details screen KG6 is displayed on the management terminal 40 by the management application when the item related to a transmitter device 30 is selected on the transmitter device list screen KG5. The transmitter device details screen KG6 displays the transmitter device information, power transmission status, whether alerts have been issued, etc. The power transmission status may be displayed as a map or graph.

### (2-4) Power transmission and reception map screen

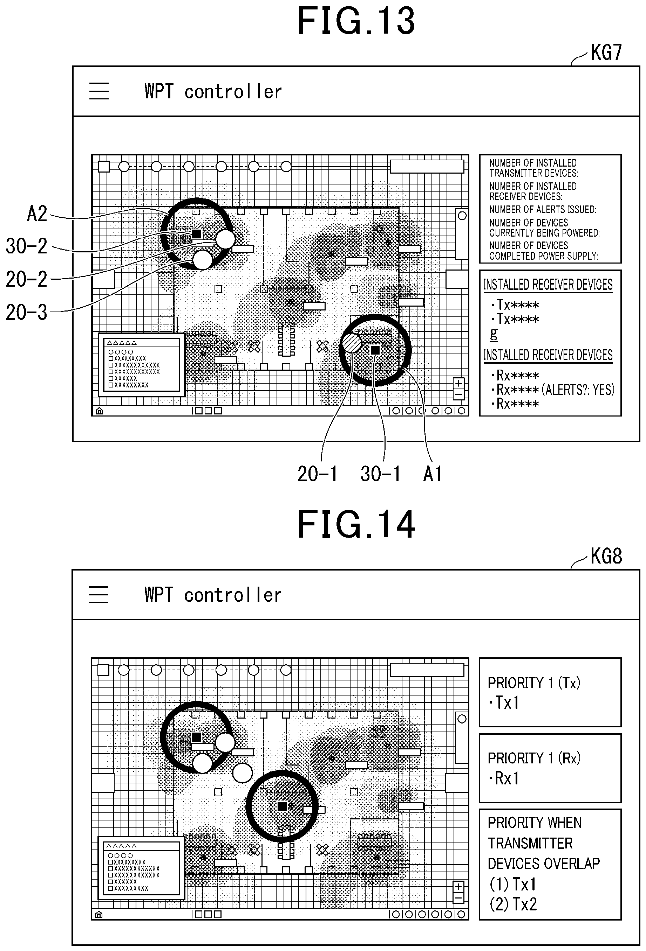

Referring to Fig. 13, a power transmission and reception map screen for the power supply control system 50 will be described. Fig. 13 is a diagram illustrating an example of the power transmission and reception map screen for the power supply control system 50 according to the present embodiment. Fig. 13 shows a power transmission and reception map screen KG7.

The power transmission and reception map screen KG7 displays a power transmission and reception map. The power transmission and reception map shows locations of receiver devices 20, locations of transmitter devices 30, power transmission ranges, power transmission and reception statuses, etc. In the store shown in the power transmission reception map of Fig. 13, three receiver devices 20-1 to 20-3, and two transmitter devices 30-1 and 30-2 are installed. In a power transmission range A1 of the transmitter device 30-1, the receiver device 20-1 is present. In a power transmission range A2 of the transmitter device 30-2, the receiver devices 20-2 and 20-3 are present. The power transmission and reception statuses may correspond, for example, to information indicating the number of transmitter devices, the number of receiver devices, the number of alerts issued, the number of devices currently being supplied with power, the number of devices completed power supply, etc. in the store shown in the power transmission and reception map.

### (2-5) Policy setting screen

Referring to Fig. 14, a policy setting screen for the power supply control system 50 will be described. Fig. 14 is a diagram illustrating an example of the policy setting screen for the power supply control system 50 according to the present embodiment. Fig. 14 shows a policy setting screen KG8.

The policy setting screen KG8 displays policy settings. Similarly to the power transmission and reception map screen KG7, the policy setting screen KG8 may display a power transmission and reception map. The policy settings displayed on the policy setting screen KG8 may be, for example, a priority order in power transmission and reception. Examples may include a priority order of transmitter devices 30 (Tx) performing power transmission, a priority order of receiver devices 20 (Rx) receiving power, a priority order when transmitter devices 30 are overlapped, etc.

As described above, the wireless power supply system 1 according to the present embodiment includes: the receiver device processing section 142 that registers receiver device information with the membership system 60 corresponding to the membership application AP (application) (a system corresponding to an application) provided to users of a space where the transmitter device 30 for wireless power supply is installed, the information being related to the receiver device 20 owned by the user and acquired via the membership application AP; the power supply request section 143 that causes the membership application AP to transmit a power supply request to the membership system 60 in response to receiving the power supply request from the user via the membership application AP; the linking processing section 632 that causes the membership system 60 to associate the receiver device information of the receiver device 20 selected as a power supply target, with the power supply control system 50 in response to receiving the power supply request from the membership application AP; and the power transmission processing section 531 that identifies the transmitter device 30 that can transmit power to the receiver device 20 as a power supply target, based on the receiver device information associated by the membership system 60 and causes the power supply control system 50 to transmit the power supply request to the identified transmitter device 30.

With this configuration, the user can use the membership application AP of the store where the user wishes to use wireless power supply to thereby use the wireless power supply without installing a new application for using the wireless power supply.

Accordingly, the wireless power supply system 1 according to the present embodiment can reduce the barriers for the user to use wireless power supply.

### <7. Modifications>

The first embodiment of the present invention has been described so far. Subsequently, modifications of the present embodiment described above will be described. The modifications described below may be applied to the present embodiment singly or in combination. These modifications may be applied in place of or in addition to the configuration described in the present embodiment.

The present embodiment described above has described an example in which power transmission parameters are determined by the power transmission processing section 531 based on the power supply target information (receiver device information or power supply setting information), but this is not a limiting example. For example, the power transmission processing section 531 may determine power transmission parameters based on the membership information of the user having the receiver device 20 as a power transmission target.

In this case, when associating the information related to a power transmission target with the power supply control system 50, the membership system 60 may also associate therewith the membership information of the user having the receiver device 20 as a power transmission target. The power transmission processing section 531 may determine power transmission parameters according to the power transmission policy, based on the membership information of the user acquired from the membership system 60. The membership information in question may include, for example, usage status information showing the user's service usage status. The power transmission processing section 531 may determine power transmission parameters according to the power transmission policy, based on the usage status information. The power transmission processing section 531 may determine, for example, a good customer level from the usage status information. The power transmission processing section 531 may determine a power supply priority based on the good customer level and determine transmission parameters. For example, the power transmission processing section 531 may assign higher priority to better customers and lower priority to less desirable customers.

Some modifications of the first embodiment of the present invention have been described. A part or all of the functions of the wireless power supply system 1, the user terminal 10, the power supply control system 50, and the membership system 60 in the present embodiment may be achieved by a computer. In this case, programs that achieve the functions may be recorded on a computer-readable recording medium so that the computer system can read and run the programs recorded on the recording medium. The computer system referred to herein includes an operating system (OS) and hardware components such as peripheral devices. The computer readable recording medium refers to a storage device such as a portable medium, e.g., a flexible disk, magneto-optical disk, ROM, and CD-ROM, or a hard disk incorporated in the computer system. The computer readable recording medium may include a medium dynamically retaining programs for a short period of time, such as a communication line that transmits programs through a network such as the Internet or a telecommunication line such as a telephone line, or a medium retaining the programs for a given period of time in that case, such as a volatile memory of the computer system serving as a server or a client. The programs described above may achieve part of the functions described above, or may achieve the functions in combination with programs recorded in advance in a computer system, or may achieve the functions using a programmable logic device such as a field programmable gate array (FPGA).

The first embodiment and modifications thereof have been described in detail referring to the drawings; however, specific configurations should not be limited to those described above. Various design modifications may be made within the range not departing from the spirit of the present invention.

### (Second Embodiment)

Referring to the drawings, a second embodiment of the present invention will be described in detail. In the second embodiment, the components common to those of the first embodiment are designated with the same reference signs as those of the first embodiment.

### <1. Configuration of wireless power supply system>

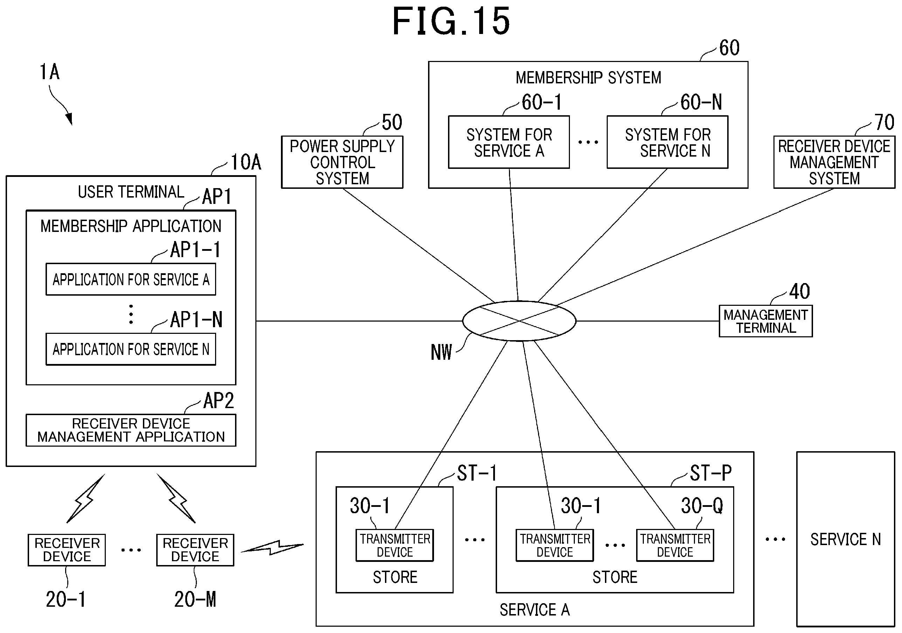

Referring to Fig. 15, a configuration of a wireless power supply system according to the present embodiment will be described. Fig. 15 is a diagram illustrating an example of a configuration of the wireless power supply system according to the present embodiment. In the following description, power supply performed wirelessly is also referred to as wireless power supply.

A wireless power supply system 1A shown in Fig. 15 provides a service for wirelessly supplying power (hereinafter also referred to as wireless power supply service) to users. The wireless power supply service is provided in a space where a transmitter device for wireless power supply is installed. For example, the space may correspond to stores, factories, etc. in commercial facilities. The space where such wireless power supply service is provided is not limited to these examples, but may be any spaces.

Users can use the wireless power supply service by registering the users' device to which power can be wirelessly supplied (hereinafter also referred to as receiver device) with the wireless power supply service. Users who wish to use the wireless power supply service are required to register in advance a receiver device desired to be powered from an application program (hereinafter may also referred to as application). In a space where a transmitter device is installed, if a user selects a receiver device from the application, to which the user wishes power to be supplied, power is transmitted to the selected receiver device from the transmitter device. In this way, the user can supply power to the receiver device.

As applications for the user to use a wireless power supply service, an application for registering a receiver device (first application) and an application for controlling power supply for the receiver device (second application) are installed. The first application has a function of establishing linking with multiple second applications. Therefore, users can use a wireless power supply service by installing only one first application into the terminal in which multiple second applications are installed.

The first application can register receiver devices as power supply targets in wireless power supply. The present embodiment will be described hereinafter taking an example in which the first application is provided by a wireless power supply service provider to manage the receiver devices used in the wireless power supply service. As an example, the first application may be assumed to be an application that can be used by persons who have registered as members of the wireless power supply service (hereinafter also referred to as receiver device management application).

The second application is provided to the users of the space where transmitter devices for wireless power supply are installed. The present embodiment will be described hereinafter taking an example in which the space where transmitter devices for wireless power supply are installed is a store in a commercial facility. As an example, the second application may be assumed to be an application that can be used by persons who have registered as members of the services offered to the store (hereinafter also referred to as membership application).

For example, the membership application may be an existing application that has been used with the services provided in the store before introduction of the wireless power supply system 1A into the store. A business entity can introduce the wireless power supply system 1A into the store by adding a function for wireless power supply to an existing application.

Therefore, when introducing the wireless power supply system 1A into the store, the business entity no longer has a need to prepare a new application for using the wireless power supply system 1A and can reduce cost (including time) for developing the application. Accordingly, the business entity can easily introduce the wireless power supply system 1A.

The number of membership applications is not limited to one, but multiple membership applications may be installed according to the services provided in the store. For example, if Service A offered by Business Entity A and Service B offered by Business Entity B are available, an application for Service A and an application for Service B may be installed. As an example, let us assume a service being a café. In this case, a membership application for Café A run by Business Entity A and a membership application for Café B run by Business Entity B may be provided.

If multiple services are offered by one business entity, the business entity may provide membership applications for the respective services, or may provide an application common to the multiple services. For example, let us assume that Business Entity A runs Café C and Café D belonging to different chains. In this case, Business Entity A may provide different membership applications for Café C and Café D, or may provide a membership application common to Café C and Café D.

If one service is offered at multiple stores, users can use the wireless power supply service at each store using one membership application.

An embodiment will be described hereinafter taking an example in which N business entities (N is a natural number) offer their respective services, and a membership application is provided for each service (i.e., an example in which there are N services and N membership applications).

As shown in Fig. 15, the wireless power supply system 1A includes a user terminal 10A, a receiver device 20, a transmitter device 30, a management terminal 40, a power supply control system 50, a membership system 60, and a receiver device management system 70. A network NW has a configuration for exchanging information, examples of which include LANs (local area networks), WANs (wide area networks), telephone networks (mobile phone networks, landline networks, etc.), regional IP (Internet protocol) networks, and the Internet.

### (1) User terminal 10A

The user terminal 10A is used for the user to use the wireless power supply service. Examples of the user terminal 10A include smartphones, tablets, and PCs (personal computers).

The user terminal 10A is communicably connected to the receiver device 20 via a wireless connection (e.g., Bluetooth (registered trademark), etc.) or a wired connection. The user terminal 10A is communicably connected to the membership system 60 and the receiver device management system 70 via the network NW.

A screen for the user to use the wireless power supply service is displayed on the user terminal 10A by the membership application. In the store, the user can operate the screen displayed on the user terminal 10A by the membership application so that power can be supplied to the receiver device.

The functions of the membership application may be provided by installing the membership application in the user terminal 10A (i.e., native application), or may be provided by a web system (i.e., web application). In the case of a web application, the membership application is managed by a server, and the functions thereof are provided via the web browser.

As an example, Fig. 15 shows an example in which a membership application AP1 as a native application is installed in the user terminal 10A. In the present embodiment, N services are offered and a membership application AP1 is provided for each service. Therefore, N membership applications AP1, i.e., an application AP1-1 for Service A to an application AP1-N for Service N, are installed in the user terminal 10A as the membership application AP1.

A screen for the user to use the wireless power supply service is displayed on the user terminal 10A by the receiver device management application. The user can operate the screen displayed on the user terminal 10A by the receiver device management application so that a receiver device can be registered.

The functions of the receiver device management application may be provided by installing the receiver device management application in the user terminal 10A (i.e., native application), or may be provided by a web system (i.e., web application). In the case of a web application, the receiver device management application is managed by a server, and the functions thereof are provided via the web browser.

Fig. 15 shows an example in which a receiver device management application AP2 as a native application is installed in the user terminal 10A. In the present embodiment, a receiver device management application AP2 common to the N services is installed. Therefore, one receiver device management application AP2 is installed in the user terminal 10A.

### (2) Receiver device 20

The receiver device 20 is a device to which power can be wirelessly supplied from a transmitter device. Examples of the receiver device 20 include users' smartphones, tablets, wearable devices, wireless earphones, wireless headphones, and PCs. If the user terminal 10A described above is a terminal to which power can be wirelessly supplied, the user terminal 10A is also one of the receiver devices 20.

The receiver device 20 is not limited to a device owned by a user. For example, the receiver device 20 may be a device installed in a store. Examples of the device installed in a store include electronic shelf labels, electronic tags, and sensor devices.

The receiver device 20 is communicably connected to the user terminal 10A via a wireless or wired connection. Also, the receiver device 20 is communicably connected to a transmitter device 30 via a wireless connection.

Fig. 15 shows an example in which users have M (M is a natural number) receiver devices 20-1 to 20-M. The receiver devices 20-1 to 20-M are each assumed to be able to communicate with the user terminal 10A and a transmitter device 30 via a wireless connection.

In communication with the user terminal 10A, the receiver device 20 may transmit, for example, receiver device information. In communication with the transmitter device 30, the receiver device 20 may receive a beacon request and transmit a beacon.

The receiver device information is one type of information related to the receiver device 20 owned by the user, that is, information acquired when registering the receiver device. The receiver device registration is performed by the user from the receiver device management application AP2. The receiver device information may be acquired from the receiver device 20 by establishing a connection with the user terminal 10A, or may be inputted from the receiver device management application AP2 by the user. Examples of the receiver device information include device name, device type, manufacturer name, product number, and battery information. Examples of the battery information include battery capacity and power supply status. The power supply status corresponds to information that includes, for example, connection frequency with the transmitter device 30, signal strength, power supply duration, and battery level.

The beacon request is a request for a beacon issued to the receiver device 20 as a power supply target. The power supply target is selected by the user from among the receiver devices 20 registered by the receiver device management application AP2. The beacon request is transmitted from a transmitter device 30 to a receiver device 20 in order to authenticate that the receiver device 20 as a power supply target is a receiver device 20 to which power can be supplied. Therefore, when a beacon request is received from a transmitter device 30, the receiver device 20 transmits a beacon to the transmitter device 30 in question. If a beacon is received in response to the beacon request, the transmitter device 30 determines that the receiver device 20 as a power supply target is a receiver device 20 to which power can be supplied. The receiver device 20 to which power can be supplied is, in other words, a receiver device 20 which is present within the power transmission range of the transmitter device 30 and to which power can be transmitted from the transmitter device 30.

### (3) Transmitter device 30

The transmitter device 30 can wirelessly supply (transmit) power to receiver devices. Under the control of the power supply control system 50, the transmitter device 30 wirelessly supplies power to at least one receiver device 20 present in the store where the transmitter device 30 is installed

The transmitter device 30 is communicably connected to the power supply control system 50 via the network NW. Also, the transmitter device 30 is communicably connected to receiver devices 20 via a wireless connection.

Fig. 15 shows an example in which the transmitter device 30 is installed in a store of Service A. In the example shown in Fig. 15, Service A is offered to P (P is a natural number) stores ST-1 to ST-P. In the store ST-1, one transmitter device 30-1 is installed. In the store ST-P, Q (Q is a natural number) transmitter devices 30-1 to 30-Q are installed. If multiple transmitter devices 30 are installed as in the store ST-P, the power supply control system 50 exerts control so that power can be transmitted from a suitable transmitter device 30 to receiver devices 20.

In communication with the power supply control system 50, the transmitter device 30 may, for example, receive a power transmission target notification, a power transmission request, etc. and transmit a power transmission availability notification, etc. In communication with a receiver device 20, the transmitter device 30 may transmit, for example, a beacon request and receive a beacon.

The power transmission target notification includes information that a power transmission request has been received from a user and information on a receiver device 20 as a power supply target, and is given to a transmitter device 30 that can transmit power to the receiver device 20 in question. The transmitter device 30 that can transmit power to the receiver device 20 is a transmitter device 30 with a power transmission range where the receiver device 20 as a power supply target is present.

The power transmission request is a request for power transmission for the receiver device 20 as a power supply target. The power transmission request is transmitted to a transmitter device 30 that is determined to be capable of transmitting power to the receiver device 20 as a power supply target.

The power transmission availability notification is given to the power supply control system 50 to notify that power can be transmitted to the receiver device 20 as a power supply target. For example, if a beacon is received from the receiver device 20 to which a beacon request has been transmitted, the transmitter device 30 may determine that power can be transmitted to the receiver device 20 in question. On the other hand, if a beacon is not received from the receiver device 20 to which a beacon request has been transmitted, the transmitter device 30 may determine that power cannot be transmitted to the receiver device 20 in question.

### (4) Management terminal 40

The management terminal 40 is used for the manager to manage the wireless power supply service. Examples of the management terminal 40 include smartphones, tablets, and PCs. The management terminal 40 is communicably connected to the power supply control system 50 via the network NW.

A screen for the manager to manage the wireless power supply service is displayed on the management terminal 40 by the management application. The manager can operate the screen displayed on the management terminal 40 by the management application to manage the wireless power supply service.

The functions of the management application may be provided by installing the management application in the management terminal 40 (i.e., native application), or may be provided by a web system (i.e., web application). In the case of a web application, the management application is managed by a server, and the functions thereof are provided via the web browser.

### (5) Power supply control system 50

The power supply control system 50 controls power supply from a transmitter device to receiver devices. For example, the power supply control system 50 may be configured by at least one server (e.g., cloud server). The power supply control system 50 is communicably connected to the transmitter device 30, the management terminal 40, and the membership system 60 via the network NW.

The power supply control system 50 also executes processing related to power supply management information which is related to power supply management in the wireless power supply system 1A. Examples of the power supply management information include information on business entities (companies) using the wireless power supply system 1A, information related to the transmitter devices 30 owned by the business entities, and information related to the receiver devices 20 to which power has been supplied in the stores of the business entities.

The business entity information includes account information of the business entities, account information of the managers in charge of management in the business entities, and store information related to the store owned by the business entities.

For example, the information related to the transmitter devices 30 owned by the business entities may indicate the number of devices installed at all stores or at each store, the number of devices in operation, installation locations, power transmission ranges, power transmission statuses, and whether alerts have been issued. The installation locations and the power transmission ranges may be visually indicated in a map, for example. For example, the power transmission statuses may correspond to information including connection frequencies with the receiver devices 20, signal conditions, power supply durations, and amounts of power transmission. For example, the power transmission statuses may be provided in the form of a graph showing the relationship between power transmission durations and amounts of power transmission.

For example, the information related to receiver devices 20 to which power has been supplied in the stores owned by the business entities may indicate the number of devices installed at all stores or at each store, the number of devices currently being supplied with power, power supply locations, power supply statuses, and whether alerts have been issued. The power supply locations may be visually indicated in a map, for example. For example, the power supply statuses may be provided in the form of a graph showing the relationship between power supply durations and amounts of power supply.

### (6) Membership system 60

The membership system 60 corresponds to the membership application AP1 (second application) and manages the users of the membership application AP1. For example, the membership system 60 may be configured by at least one server (e.g., cloud server). The membership system 60 is communicably connected to the user terminal 10A, the power supply control system 50, and the receiver device management system 70 via the network NW.

The membership system 60 corresponds to the membership application AP1. Therefore, if there are multiple membership applications AP1, there are also multiple membership systems 60. Fig. 15 shows an example in which there are N membership applications AP1. Therefore, there are N membership systems 60, i.e., a system 60-1 for Service A to a system 60-N for Service N.

### (7) Receiver device management system 70

The receiver device management system 70 (first system) corresponds to the receiver device management application AP2 (first application) and manages the information related to receiver devices 20 registered by the users. For example, the receiver device management system 70 may be configured by at least one server (e.g., cloud server). The receiver device management system 70 is communicably connected to the user terminal 10A and the membership system 60 via the network NW.

The receiver device management system 70 corresponds to the receiver device management application AP2. The receiver device management application AP2 is common to multiple services (membership applications AP1). Therefore, the receiver device management system 70 is also common to the multiple services (membership systems 60). Fig. 15 shows an example in which there is one receiver device management application AP2, and therefore the number of the receiver device management systems 70 is also one.

### <2. Functional configuration of user terminal>

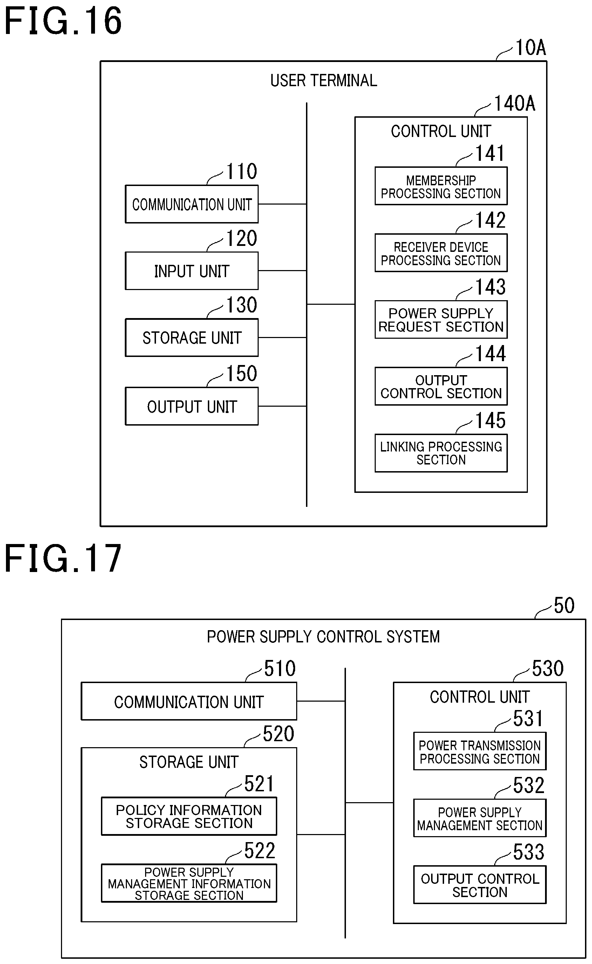

The configuration of the wireless power supply system 1A according to the present embodiment has been described. Referring to Fig. 16, a functional configuration of the user terminal 10A according to the present embodiment will be described. Fig. 16 is a block diagram illustrating an example of a functional configuration of the user terminal 10A according to the present embodiment.

As shown in Fig. 16, the user terminal 10A includes a communication unit 110, an input unit 120, a storage unit 130, a control unit 140A, and an output unit 150.

### (1) Communication unit 110

The communication unit 110 has a function of transmitting and receiving various types of information. In communication with the receiver device 20, the communication unit 110 may receive, for example, receiver device information. In communication with the membership system 60, the communication unit 110 may transmit, for example, membership information, an application link request, a power supply requests, etc. In communication with the receiver device management system 70, the communication unit 110 may transmit, for example, membership information, receiver device information, power supply setting information, a receiver device information request, etc. and receive receiver device information, power supply setting information, etc.

The membership information relates to the user using the wireless power supply service, that is, information acquired when registering as a member. The membership registration is performed by the user from the membership application AP1 and the receiver device management application AP2. The membership information is inputted by the user from the membership application AP1 and the receiver device management application AP2. Examples of the membership information registered from the membership application AP1 include name, email address, address, date of birth, and main area of use. Examples of the membership information registered from the receiver device management application AP2 include name, email address, address, date of birth, and a power transmission plan.

The application link request is a request for establish linking between applications, i.e., a request for associating the membership application AP1 with the receiver device management application AP2 (hereinafter also referred to as application linking). With the application link request, the information related to the receiver device 20 registered with the receiver device management application AP2 is associated with the membership application AP1. For example, the receiver device information, power supply setting information, etc. registered with the receiver device management system 70 by the receiver device management application AP2 may be associated by the receiver device management system 70 to the membership system 60.

Thus, the membership application AP1 becomes able to handle the information related to the receiver device 20 registered with the receiver device management application AP2. The membership application AP1 can provide a power supply request based on the information associated by the receiver device management application AP2.

The power supply request is a request for power supply for the receiver device 20 as a power supply target. The power supply target is selected by the user from among the receiver devices 20 registered with the membership application AP1.

The power supply setting information relates to the receiver device 20 owned by the user, that is, information acquired when registering settings. The setting registration is performed by the user from the receiver device management application AP2. The power supply setting information is inputted by the user from the receiver device management application AP2. The power supply setting information relates to power supply settings for the receiver device 20 and may include, for example, power supply conditions, priority, etc.

Examples of the power supply conditions include conditions set in the automatic power supply settings and conditions set in the power supply stop settings. For example, the conditions set in the automatic power supply settings may include a battery capacity (battery level). Thus, for example, if the battery capacity of the receiver device 20 falls below the set battery capacity, power supply is automatically started for the receiver device 20 in question. Examples of the conditions set in the power supply stop settings include a battery capacity (battery level), and power supply duration. Thus, for example, if the battery capacity of the receiver device 20 falls below the set battery capacity, or if the power supply duration for the receiver device 20 exceeds the set power supply duration, power supply to the receiver device 20 in question may be automatically stopped.

For example, the priority may be set in the power supply priority settings. For example, the priority set in the power supply priority settings may be a priority order of power supply among multiple receiver devices 20 registered. The priority order is set in the order of how much of a problem would be caused if the battery capacity ran out. For example, if the registered receiver devices 20 are smartphones and headphones, the priority order is set so that the smartphones take priority over the headphones.

The receiver device information request is a request for receiver device information issued to the receiver device management system 70. The receiver device information request also includes the power supply setting information correlated with the receiver device information.

### (2) Input unit 120

The input unit 120 has a function of accepting input from users. For example, the input unit 120 may be configured by an input device, such as buttons, touch panel, microphone, mouse, and keyboard, included as hardware in the user terminal 10A.

The input unit 120 may accept input, such as membership registration operations, application linking operations, power supply start operations, and settings view operations, via the membership application AP1. In response to the membership registration operations, the input unit 120 accepts registration of membership information related to the membership application AP1. In response to the power supply start operations, the input unit 120 accepts an application link request from the user. The input unit 120 accepts a power supply request from the user in response to the power supply start operations. In response to the settings view operations, the input unit 120 accepts a settings view request related to the registered receiver device 20.

The input unit 120 may accept input, such as membership registration operations, receiver device registration operations, setting operations, and receiver device information view operations, via the receiver device management application AP2. In response to the membership registration operations, the input unit 120 accepts registration of membership information related to the receiver device management application AP2. The input unit 120 accepts registration of receiver device information in response to the receiver device registration operations. The input unit 120 accepts registration of power supply settings in response to the setting operations. In response to the receiver device information view operations, the input unit 120 accepts a request for viewing the information related to the receiver device 20.

### (3) Storage unit 130

The storage unit 130 has a function of storing various types of information. The storage unit 130 is configured by a storage medium, such as HDD (hard disk drive), SSD (solid state drive), flash memory, EEPROM (electrically erasable programmable read only memory), RAM (random access read/write memory), ROM (read only memory), or any combination of these storage media, included as hardware in the user terminal 10A.

For example, the storage unit 130 may store the membership application AP1 and the receiver device management application AP2 installed in the user terminal 10A, as well as the information inputted to each application.

### (4) Control unit 140A

The control unit 140A has a function of controlling the overall operations of the user terminal 10A. The control unit 140A may be achieved, for example, by allowing the CPU (central processing unit) included as hardware in the user terminal 10A to execute programs.

As shown in Fig. 16, the control unit 140A includes a membership processing section 141, a receiver device processing section 142, a power supply request section 143, a linking processing section 145 (first linking processing section), and an output control section 144.

### (4-1) Membership processing section 141

The membership processing section 141 has a function of performing processing related to membership. For example, when membership registration operations for the membership application AP1 are accepted by the input unit 120, the membership processing section 141 may perform membership registration processing for registering membership information related to the membership application AP1 with the membership system 60. In the membership registration processing related to the membership application AP1, the membership processing section 141 may cause the membership application AP1 to transmit the membership information acquired in response to the user's membership registration operations to the membership system 60 via the communication unit 110 and cause the membership system 60 to register the membership information.

When membership registration operations for the receiver device management application AP2 are accepted by the input unit 120, the membership processing section 141 may perform membership registration processing for registering membership information related to the receiver device management application AP2 with the receiver device management system 70. In the membership registration processing related to the receiver device management application AP2, the membership processing section 141 may cause the receiver device management application AP2 to transmit the membership information acquired in response to the user's membership registration operations to the receiver device management system 70 via the communication unit 110 and cause the receiver device management system 70 to register the membership information.

### (4-2) Receiver device processing section 142

The receiver device processing section 142 has a function of performing processing related to the receiver device 20. For example, when receiver device registration operations are accepted by the input unit 120, the receiver device processing section 142 may perform receiver device registration processing for registering receiver device information with the receiver device management system 70. By performing the receiver device registration processing, the receiver device processing section 142 may register the receiver device information related to the receiver device 20 owned by the user, which has been acquired via the receiver device management application AP2, with the receiver device management system 70 corresponding to the receiver device management application AP2. Specifically, the receiver device processing section 142 may cause the receiver device management application AP2 to transmit the receiver device information acquired in response to the user's receiver device registration operations to the receiver device management system 70 via the communication unit 110 and cause the receiver device management system 70 to register the receiver device information.

Also, when setting operations are accepted by the input unit 120, the receiver device processing section 142 may perform setting registration processing for registering power supply setting information with the receiver device management system 70. By performing the setting registration processing, the receiver device processing section 142 may register the power supply setting information related to the receiver device 20 owned by the user, which has been acquired via the receiver device management application AP2, with the receiver device management system 70 corresponding to the receiver device management application AP2. Specifically, the receiver device processing section 142 may cause the receiver device management application AP2 to transmit the power supply setting information acquired in response to the user's setting operations to the receiver device management system 70 via the communication unit 110 and cause the receiver device management system 70 to register the power supply setting information.

### (4-3) Power supply request section 143

The power supply request section 143 has a function of performing processing related to power supply requests. When a power supply request from the user is received via the membership application AP1 or the receiver device management application AP2, for the receiver device 20 indicated by the receiver device information which is acquired from the receiver device management system 70 as a result of application linking, the power supply request section 143 causes the application that is a requester to transmit the power supply request to the corresponding system. The present embodiment describes an example in which a power supply request from the user is received via the membership application AP1.

For example, when power supply start operations are accepted by the input unit 120, the power supply request section 143 may perform power supply request processing for transmitting a power supply request to the membership system 60. In the power supply request processing, the power supply request section 143 may cause the membership application AP1 to transmit a power supply request to the membership system 60 via the communication unit 110.

### (4-4) Linking processing section 145

The linking processing section 145 has a function of performing various types of linking processing. The linking processing section 145 associates the receiver device management application AP2 and the membership application AP1 with each other based on the operations by the membership application AP1. For example, the linking processing section 145 may cause the membership application AP1 to transmit a link request to the receiver device management system 70 and cause the receiver device management system 70 to associate receiver device information with the membership application AP1. Specifically, when application linking operations are accepted by the input unit 120, the linking processing unit 145 may cause the membership application AP1 to transmit an application link request to the membership system 60. Receiving the application link request, the membership system 60 may transmit a receiver device information request to the receiver device management system 70 and receive receiver device information from the receiver device management system 70. If power supply setting information is correlated with the receiver device information, the power supply setting information may also be associated together with the receiver device information.

Thus, the membership application AP1 may be associated with the receiver device management application AP2 so that processing related to the receiver device 20 can be performed in the membership application AP1.

Also, the linking processing section 145 may cause the membership application AP1 to transmit a start-up request to the receiver device management application AP2 to cause the membership application AP1 to start up the receiver device management application AP2. Specifically, when settings view operations are accepted by the input unit 120, the linking processing unit 145 may cause the membership application AP1 to transmit an application start-up request to the receiver device management application AP2. Receiving the application start-up request, the receiver device management application AP2 may start up the application on its own.

### (4-5) Output control section 144

The output control section 144 has a function of controlling output of various types of information. For example, the output control section 144 may cause the output unit 150 to display a screen of the membership application AP1 or a screen of the receiver device management application AP2.

### (5) Output unit 150

The output unit 150 has a function of outputting various types of information. For example, the output unit 150 is configured by an output device, e.g., a display device such as a display and a touch screen (touch panel) and an audio output device such as a speaker, included as hardware in the user terminal 10A.

For example, the output unit 150 may display a screen of the membership application AP1 or a screen of the receiver device management application AP2 on the display device under the control of the control section 144.

### <3. Functional configuration of power supply control system>

The functional configuration of the user terminal 10A according to the present embodiment has been described. Referring to Fig. 17, a functional configuration of the power supply control system 50 according to the present embodiment will be described. Fig. 17 is a block diagram illustrating an example of a functional configuration of the power supply control system 50 according to the present embodiment.

As shown in Fig. 17, the power supply control system 50 includes a communication unit 510, a storage unit 520, and a control unit 530.

### (1) Communication unit 510

The communication unit 510 has a function of transmitting and receiving various types of information. In communication with a transmitter device 30, the communication unit 510 may transmit, for example, a power transmission target notification, a power transmission request, etc. and receive a power transmission availability notification, etc. In communication with the management terminal 40, the communication unit 510 may transmit, for example, power supply management information, etc. In communication with the membership system 60, the communication unit 510 receives information (e.g., receiver device information or power supply setting information) related to a power transmission target, an alert notification, etc.

### (2) Storage unit 520

The storage unit 520 has a function of storing various types of information. The storage unit 520 is configured by a storage medium, such as HDD, SSD, flash memory, EEPROM, RAM, ROM, and any combination of these media, included as hardware in the power supply control system 50.

As shown in Fig. 17, the storage unit 520 includes a policy information storage section 521, and a power supply management information storage section 522.

### (2-1) Policy information storage section 521

The policy information storage section 521 has a function of storing policy information. The policy information includes policy for the transmitter device 30 to transmit power to receiver devices 20 (hereinafter also referred to as power transmission policy). The power transmission policy includes settings such as a method of determining priority of power supply and amount of power transmitted. For example, priority of power supply and amount of power transmitted may be determined according to the receiver device information of the receiver devices 20 located within the power transmission range of the transmitter device 30.

### (2-2) Power supply management information storage section 522

The power supply management information storage section 522 has a function of storing power supply management information. The power supply management information storage section 522 stores power supply management information generated in the processing of a power supply management section 532 described later.

### (3) Control unit 530

The control unit 530 has a function of controlling the overall operations of the power supply control system 50. For example, the control unit 530 may be achieved by causing the CPU included as hardware in the power supply control system 50 to execute programs.

As shown in Fig. 17, the control unit 530 includes a power transmission processing section 531, a power supply management section 532, and an output control section 533.

### (3-1) Power transmission processing section 531

The power transmission processing section 531 has a function of performing processing related to power transmission. Based on the information related to power transmission targets associated by the membership system 60, the power transmission processing section 531 identifies a transmitter device 30 from which power can be transmitted to a receiver device 20 as a power supply target and causes the power supply control system 50 to transmit a power transmission request to the identified transmitter device 30. For this purpose, the power transmission processing section 531 may perform, for example, power transmission target notification processing, power transmission parameter determination processing, power transmission request processing, etc.

The information related to power transmission targets may include at least receiver device information and may further include power supply setting information. In this case, the power transmission processing section 531 may control power transmission performed by the transmitter devices 30 based on not only the receiver device information but also the power supply setting information. In other words, the power transmission processing section 531 may control power transmission performed by the transmitter devices 30 based on at least the receiver device information, or may control power transmission performed by the transmitter devices 30 based on the receiver device information and the power supply setting information.

When information related to a power transmission target is associated by the membership system 60, the power transmission processing section 531 performs the power transmission target notification processing.

The power transmission target notification processing will be described in detail. Based on the receiver device information received from the membership system 60 by the communication unit 510, the power transmission processing section 531 identifies a transmitter device 30 from which power can be transmitted to the receiver device 20 as a power supply target. First, the power transmission processing section 531 identifies the store where the receiver device 20 as a power supply target indicated by the receiver device information is present. Next, from among the transmitter devices 30 installed in the identified store, the power transmission processing section 531 identifies a transmitter device 30 having a power transmission range where the receiver device 20 as a power supply target is present. After identification, the power transmission processing section 531 causes the power supply control system 50 to transmit a power transmission target notification to the identified transmitter device 30 via the communication unit 510.

When the communication unit 510 receives a power transmission availability notification from the transmitter device 30 and if the power transmission availability notification indicates power transmission as being possible, the power transmission processing section 531 performs the power transmission parameter determination processing.

The power transmission parameter determination processing will be described in detail. The power transmission processing section 531 determines power transmission parameters based on the power transmission policy and controls power transmission of the transmitter device 30 based on the determined power transmission parameters. First, the power transmission processing section 531 acquires policy information corresponding to the receiver device 20 as a power supply target indicated by the receiver device information, from the policy information storage section 521. Next, the power transmission processing section 531 determines power transmission parameters according to the power transmission policy indicated by the policy information, based on the receiver device information. For example, the power transmission processing section 531 may make a comparison with the receiver device information of other receiver devices 20 as power supply targets and determine priority of power transmission as a power transmission parameter according to the power supply status of each receiver device 20. As an example, the power transmission processing section 531 may adjust the order of power transmission or the amount of power transmitted so that the receiver device 20 having a lower battery level than other receiver devices 20 can be supplied with power preferentially and then determine a transmission parameter.

When determining power transmission parameters, the power supply setting information may be referred to. The power supply status of each receiver device 20 can be obtained from the power supply management information stored in the power supply management information storage section 522.

After performing the power transmission parameter determination processing, the power transmission processing section 531 performs the power transmission request processing.

The power transmission request processing will be described in detail. First, the power transmission processing section 531 generates a power transmission request so that power is transmitted according to the power transmission parameters determined during power transmission parameter determination processing. Next, the power transmission processing section 531 transmits the power transmission request, via the communication unit 510, to the transmitter device 30 from which power can be transmitted to the receiver device 20 as a power supply target.

### (3-2) Power supply management section 532

The power supply management section 532 has a function of managing power supply to receiver devices 20 from transmitter devices 30. For example, the power supply management section 532 may update the power supply management information stored in the power supply management information storage section 522, based on the power supply statuses indicated in the receiver device information received from the membership system 60 by the communication unit 510, the power transmission statuses obtained by controlling power transmission of the transmitter devices 30, etc.

Also, the power supply management section 532 may acquire power supply status information indicating the power supply statuses of the receiver devices 20 as a result of power transmission from the transmitter devices 30. For example, the power supply management section 532 may generate power supply status information indicating connection frequency, signal conditions, power supply duration, battery level, etc., based on the power supply statuses indicated by the receiver device information and the power transmission statuses indicated by the transmitter device information.

### (3-3) Output control section 533

The output control section 533 has a function of controlling output of various types of information. For example, the output control section 533 may cause the management terminal 40 to display a management screen based on power supply management information.

The output control section 533 causes the membership application AP1 to display the power supply status of a receiver device 20, based on the power supply status information acquired by the power supply management section 532.

If the power transmission processing section 531 determines power transmission from the transmitter device 30 to the receiver device 20 as not being possible, the output control section 533 causes the membership application AP1 to display an alert notification indicating accordingly.

### <4. Functional configuration of membership system>

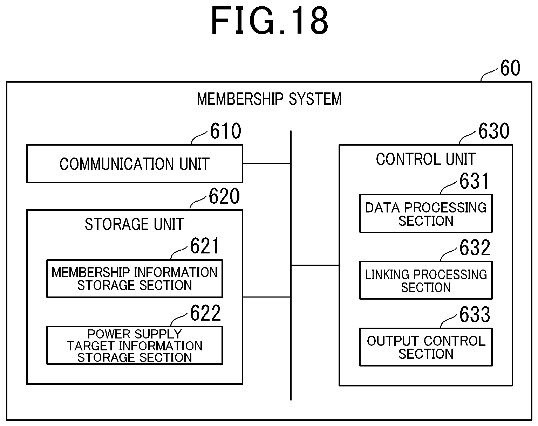

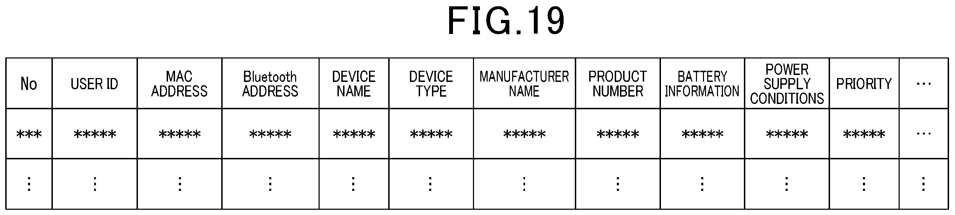

The functional configuration of the power supply control system 50 according to the present embodiment has been described. Subsequently, referring to Figs. 18 and 19, a functional configuration of the membership system 60 according to the present embodiment will be described. Fig. 18 is a block diagram illustrating an example of a functional configuration of the membership system 60 according to the present embodiment.

As shown in Fig. 18, the membership system 60 includes a communication unit 610, a storage unit 620, and a control unit 630.

### (1) Communication unit 610

The communication unit 610 has a function of transmitting and receiving various types of information. In communication with the user terminal 10A, the communication unit 610 may receive, for example, membership information, application link requests, power supply requests, etc. In communication with the power supply control system 50, the communication unit 610 transmits information (e.g., receiver device information or power supply setting information) related to power transmission targets and receives alert notifications, etc. In communication with the receiver device management system 70, the communication unit 610 transmits a receiver device information requests, etc. and receives receiver device information, power supply setting information, etc.

### (2) Storage unit 620

The storage unit 620 has a function of storing various types of information. The storage unit 620 is configured by a storage medium, such as HDD, SSD, flash memory, EEPROM, RAM, ROM, and any combination of these media, included as hardware in the membership system 60.

As shown in Fig. 18, the storage unit 620 includes a membership information storage section 621, and a power supply target information storage section 622.

### (2-1) Membership information storage section 621

The membership information storage section 621 has a function of storing membership information related to the membership application AP1. The membership information storage section 621 stores membership information received from the user terminal 10A by the communication unit 610.

### (2-2) Power supply target information storage section 622

The power supply target information storage section 622 has a function of storing power supply target information. The power supply target information relates to power supply targets and may include, for example, information in which the membership information, receiver device information, and power supply setting information are correlated with each other. The power supply target information storage section 622 stores power supply target information, based on the information related to receiver devices 20 received from the receiver device management system 70 by the communication unit 610.

Referring now to Fig. 19, a data configuration of the power supply target information according to the present embodiment will be described. Fig. 19 is a diagram illustrating an example of a data configuration of the power supply target information according to the present embodiment.

For example, as shown in Fig. 19, the power supply target information may include data, such as No., user ID, MAC address, Bluetooth address, device name, device type, manufacturer name, product number, battery information, power supply conditions, and priority.

### (3) Control unit 630

The control unit 630 has a function of controlling the overall operations of the membership system 60. For example, the control unit 630 may be achieved by causing the CPU included as hardware in the membership system 60 to execute programs.

As shown in Fig. 18, the control unit 630 includes a data processing section 631, a linking processing section 632 (second linking processing section), and an output control section 633.

### (3-1) Data processing section 631

The data processing section 631 has a function of performing data processing. For example, the data processing section 631 may perform registration processing of data received from the user terminal 10A by the communication unit 610. The data targeted to registration processing include membership information, receiver device information, and power supply setting information.

### (3-2) Linking processing section 632

The linking processing section 632 has a function of performing linking processing of data. For example, the linking processing section 632 may perform linking processing related to application link requests. When the communication unit 610 accepts an application link request from the membership application AP1 (user terminal 10A), the linking processing section 632 may cause the communication unit 610 to transmit a receiver device information request to the receiver device management system 70. Thus, the receiver device information is associated with the membership system 60 by the receiver device management system 70. If power supply setting information is correlated with the receiver device information, the power supply setting information may also be associated with the membership system 60.

The linking processing section 632 performs linking processing related to power supply requests. When a power supply request is received from an application as a requester, the linking processing section 632 causes the system corresponding to the application as a requester to associate the receiver device information of the receiver device 20 selected as a power supply target with the power supply control system 50. The present embodiment describes an example in which a power supply request from the user is received via the membership application AP1. For example, when the communication unit 610 accepts a power supply request from the membership application AP1 (user terminal 10A), the linking processing section 632 may associate (transmit) the power supply target information with (to) the power supply control system 50.

The linking processing section 632 may associate at least the receiver device information of the receiver device 20 as a power supply target with the power supply control system 50. Specifically, the linking processing section 632 may acquire receiver device information from the power supply target information storage section 622, for the receiver device 20 selected as a power supply target indicated in the power supply request. After acquisition, the linking processing section 632 may cause the membership system 60 to associate the acquired receiver device information with the power supply control system 50 via the communication unit 610.

If power supply setting information is set for the receiver device 20 as a power supply target, the linking processing section 632 may also acquire the power supply setting information correlated with the receiver device information from the power supply target information storage section 622. After acquisition, the linking processing section 632 may cause the membership system 60 to associate the acquired receiver device information and the power supply setting information with the power supply control system 50 via the communication unit 610.

### (3-3) Output control section 633

The output control section 633 has a function of controlling output of various types of information. For example, the output control section 633 may cause the user terminal 10A to display a screen for the membership application AP1.

### <5. Functional configuration of receiver device management system>

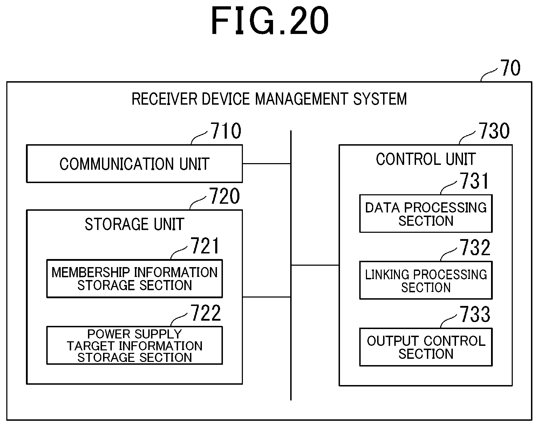

The functional configuration of the membership system 60 according to the present embodiment has been described. Subsequently, referring to Fig. 20, a functional configuration of the receiver device management system 70 according to the present embodiment will be described. Fig. 20 is a block diagram illustrating an example of a functional configuration of the receiver device management system 70 according to the present embodiment.

As shown in Fig. 20, the receiver device management system 70 includes a communication unit 710, a storage unit 720, and a control unit 730.

### (1) Communication unit 710

The communication unit 710 has a function of transmitting and receiving various types of information. In communication with the user terminal 10A, the communication unit 710 may receive, for example, membership information, receiver device information, power supply setting information, receiver device information requests, etc. and transmit receiver device information, power supply setting information, etc. In communication with the membership system 60, the communication unit 710 may receive, for example, receiver device information requests, etc. and transmit receiver device information, power supply setting information, etc.

### (2) Storage unit 720

The storage unit 720 has a function of storing various types of information. The storage unit 720 is configured by a storage medium, such as HDD, SSD, flash memory, EEPROM, RAM, ROM, and any combination of these media, included as hardware in the receiver device management system 70.

As shown in Fig. 20, the storage unit 720 includes a membership information storage section 721, and a power supply target information storage section 722.

### (2-1) Membership information storage section 721

The membership information storage section 721 has a function of storing membership information related to the receiver device management application AP2. The membership information storage section 721 stores membership information received from the user terminal 10A by the communication unit 710.

### (2-2) Power supply target information storage section 722

The power supply target information storage section 722 has a function of storing power supply target information. The power supply target information relates to power supply targets and may include, for example, information in which the membership information, receiver device information, and power supply setting information are correlated with each other. The power supply target information storage section 722 stores power supply target information, based on the information related to receiver devices 20 received from the receiver device management application AP2 (user terminal 10A) by the communication unit 710.

### (3) Control unit 730

The control unit 730 has a function of controlling the overall operations of the receiver device management system 70. For example, the control unit 730 may be achieved by causing the CPU included as hardware in the receiver device management system 70 to execute programs.

As shown in Fig. 20, the control unit 730 includes a data processing section 731, a linking processing section 732, and an output control section 733.

### (3-1) Data processing section 731

The data processing section 731 has a function of performing data processing. For example, the data processing section 731 may perform registration processing of data received from the user terminal 10A by the communication unit 710. The data targeted to registration processing include membership information, receiver device information, and power supply setting information.

### (3-2) Linking processing section 732

The linking processing section 732 has a function of performing linking processing of data. For example, the linking processing section 732 may perform linking processing related to application link requests. When the communication unit 710 accepts a receiver device information request from the membership system 60, the linking processing section 732 may cause the communication unit 710 to transmit the receiver device information to the membership system 60. Thus, the receiver device information is associated with the membership system 60 by the receiver device management system 70. If power supply setting information is correlated with the receiver device information, the linking processing section 732 may also transmit the power supply setting information to the membership system 60.

The linking processing section 732 may perform linking processing for viewing the receiver device information. When the communication unit 710 accepts a receiver device information request from the receiver device management application AP2 (user terminal 10A), the linking processing section 732 may cause the communication unit 710 to transmit the receiver device information to the receiver device management application AP2. If power supply setting information is correlated with the receiver device information, the power supply setting information is also transmitted to the receiver device management application AP2.

### (3-3) Output control section 733

The output control section 733 has a function of controlling output of various types of information. For example, the output control section 633 may cause the user terminal 10A to display a screen for the membership application AP1.

### <6. Processing flow>

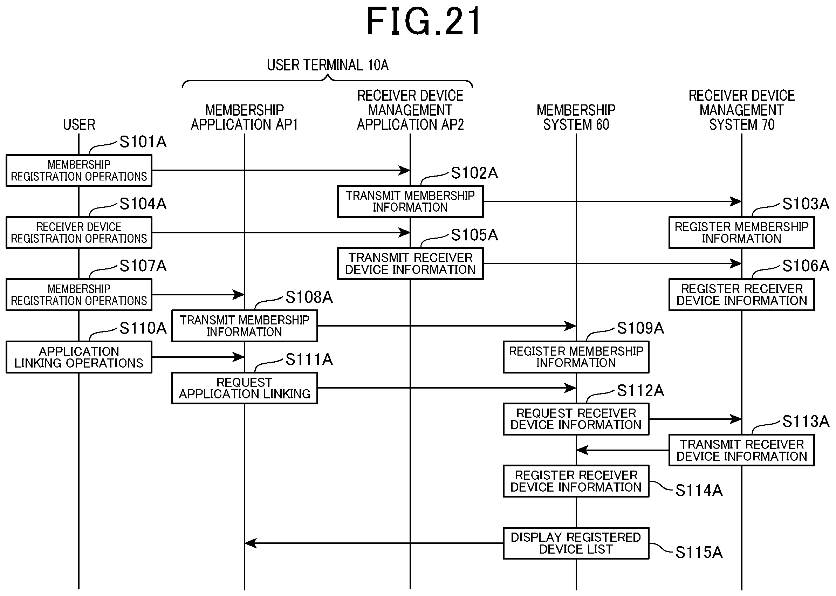

The functional configuration of the receiver device management system 70 according to the present embodiment has been described. Subsequently, referring to Figs. 21 to 23, a processing flow according to the present embodiment will be described. The following describes the case where the user provides a power supply request via the membership application AP1.

### (1) Processing flow for various types of registration and displaying registered device list

Fig. 21 is a sequence diagram illustrating an example of a processing flow for various types of registration and displaying a registered device list according to the present embodiment.

As shown in Fig. 21, first, the user performs membership registration operations related to the receiver device management application AP2, on the user terminal 10A (step S101A). Specifically, the user starts up the receiver device management application AP2 on the user terminal 10A and inputs the membership information on the membership registration screen displayed by the receiver device management application AP2 to register as a member.

In response to the membership registration operations, the membership processing section 141 of the user terminal 10A transmits the membership information to the receiver device management system 70 (step S102A). Specifically, in the membership registration processing, the membership processing section 141 acquires the membership information inputted by the user and causes the receiver device management application AP2 to transmit the membership information to the receiver device management system 70 via the communication unit 110 for registration.

The data processing section 731 of the receiver device management system 70 registers the membership information from the user terminal 10A (step S103A). Specifically, the data processing section 731 causes the membership information storage section 721 to store the membership information received from the user terminal 10A by the communication unit 710.

Next, the user performs receiver device registration operations on the user terminal 10A (step S104A). Specifically, the user inputs receiver device information on the receiver device registration screen, which has been displayed on the user terminal 10A by the receiver device management application AP2 to register as a receiver device.

In response to the receiver device registration operations, the receiver device processing section 142 of the user terminal 10A transmits receiver device information to the receiver device management system 70 (step S105A). Specifically, in the receiver device registration processing, the receiver device processing section 142 acquires the receiver device information inputted by the user and causes the receiver device management application AP2 to transmit the receiver device information to the receiver device management system 70 via the communication unit 110 for registration.

The data processing section 731 of the receiver device management system 70 registers the receiver device information from the user terminal 10A (step S106A). Specifically, the data processing section 731 causes the power supply target information storage section 722 to store the receiver device information received from the user terminal 10A by the communication unit 710.

Next, the user performs membership registration operations related to the membership application AP1, on the user terminal 10A (step S107A). Specifically, the user starts up the membership application AP1 on the user terminal 10A and inputs the membership information on the membership registration screen displayed by the membership application AP1 to register as a member.

In response to the membership registration operations, the membership processing section 141 of the user terminal 10A transmits the membership information to the membership system 60 (step S108A). Specifically, in the membership registration processing, the membership processing section 141 acquires the membership information inputted by the user and causes the membership application AP1 to transmit the membership information to the membership system 60 via the communication unit 110 for registration.

The data processing section 631 of the membership system 60 registers the membership information from the user terminal 10A (step S109A). Specifically, the data processing section 631 causes the membership information storage section 621 to store the membership information received from the user terminal 10A by the communication unit 610.

Next, the user performs application linking operations on the user terminal 10A (step S110A). Specifically, the user selects an Application Linking item on the application linking screen displayed on the user terminal 10A by the membership application AP1.

In response to the application linking operations, the linking processing section 145 of the user terminal 10A causes the membership application AP1 to transmit an application link request to the membership system 60 (step S111A).

When the communication unit 610 accepts an application link request from the user terminal 10A, the linking processing section 632 of the membership system 60 transmits a receiver device information request to the receiver device management system 70 (step S112A).

When the communication unit 710 accepts a receiver device information request from the membership system 60, the linking processing section 732 of the receiver device management system 70 transmits receiver device information to the membership system 60 (step S113A). Specifically, the linking processing section 732 acquires receiver device information corresponding to the user who has performed the application linking operations from the power supply target information storage section 722 and transmits the acquired information to the membership system 60 via the communication unit 710.

The data processing section 631 of the membership system 60 registers the receiver device information received from the receiver device management system 70 by the communication unit 610, with the power supply target information storage section 622 (step S114A).

The output control section 633 of the membership system 60 causes the membership application AP1 to display a registered device list screen, based on the power supply target information (step S115A).

### (2) Processing flow for starting power supply

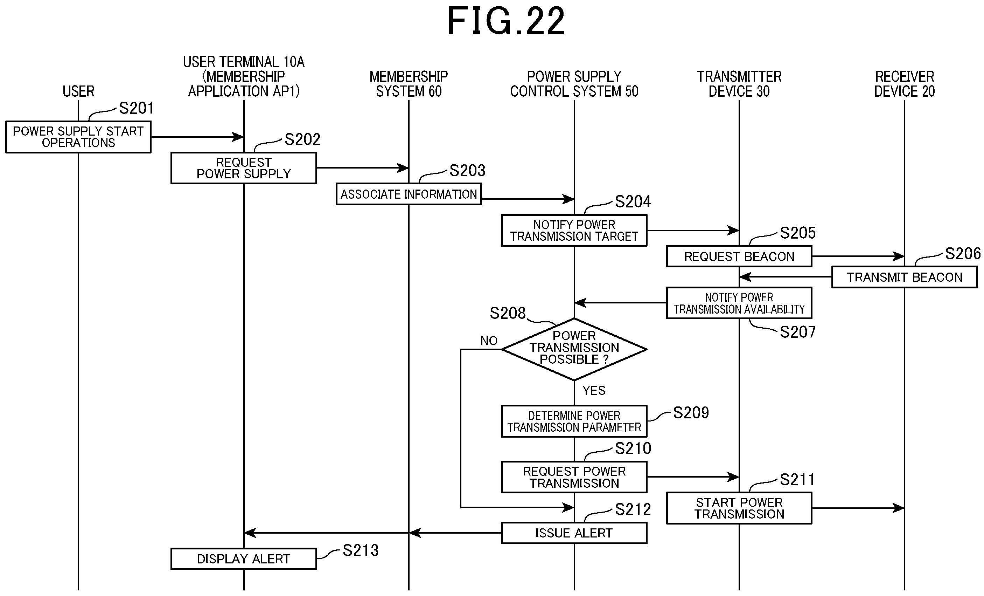

Fig. 22 is a sequence diagram illustrating an example of a processing flow for starting power supply according to the present embodiment. The processing shown in Fig. 22 may be performed, for example, subsequent to the processing shown in Fig. 21. The following description will be given taking an example in which a receiver device 20 as a power supply target is selected by the user from the registered device list displayed on the membership application AP1 at step S115A of Fig. 21.

As shown in Fig. 22, first, the user performs power supply start operations on the user terminal 10A (step S201). Specifically, the user selects a receiver device 20 as a power supply target from the registered device list displayed on the user terminal 10A by the membership application AP1 and provides a power supply request.

In response to the power supply start operations, the power supply request section 143 of the user terminal 10A transmits a power supply request to the membership system 60 (step S202). Specifically, in the power supply request processing, the power supply request section 143 causes the membership application AP1 to transmit a power supply request to the membership system 60 via the communication unit 110, for the receiver device 20 selected in response to the power supply start operations inputted by the user.

The linking processing section 632 of the membership system 60 associates the power supply target information with the power supply control system 50 (step S203). Specifically, the linking processing section 632 acquires corresponding power supply target information from the power supply target information storage section 622, for the receiver device 20 as a power supply target which is indicated by the power supply request received from the user terminal 10A by the communication unit 610 and causes the membership system 60 to associate (transmit) the acquired information with (to) the power supply control system 50 via the communication unit 610.

The power transmission processing section 531 of the power supply control system 50 transmits a power transmission target notification to a transmitter device 30 (step S204). Specifically, based on the power supply target information received from the membership system 60 by the communication unit 510, the power transmission processing section 531 identifies a transmitter device 30 from which power can be transmitted to the receiver device 20 as a power supply target and causes the power supply control system 50 to transmit a power transmission target notification to the transmitter device 30 via the communication unit 510.

The transmitter device 30 transmits a beacon request to the receiver device 20 as a power supply target (step S205). Specifically, based on the power transmission target notification received from the power supply control system 50, the transmitter device 30 identifies the receiver device 20 as a power supply target and transmits a beacon request to the identified receiver device 20.

The receiver device 20 transmits a beacon to the transmitter device 30 (step S206). Specifically, when a beacon request is received from a transmitter device 30, the receiver device 20 transmits a beacon to the transmitter device 30 in question.

The transmitter device 30 transmits a power transmission availability notification to the power supply control system 50 (step S207). Specifically, if a beacon is received from the receiver device 20, the transmitter device 30 determines power transmission to the receiver device 20 as a power supply target as being possible and transmits a power transmission availability notification indicating power transmission as being possible to the power supply control system 50. On the other hand, if no beacon is received from the receiver device 20, the transmitter device 30 determines power transmission to the receiver device 20 as a power supply target as not being possible and transmits a power transmission availability notification indicating power transmission as not being possible to the power supply control system 50.

Based on the power transmission availability notification received from the transmitter device 30 by the communication unit 510, the power transmission processing section 531 of the power supply control system 50 determines whether power can be transmitted from the transmitter device 30 to the receiver device 20 (step S208). If power transmission is possible (YES at step S208), processing proceeds to step S209. On the other hand, if power transmission is not possible (NO at step S208), processing proceeds to step S212.

When processing proceeds to step S209, the power transmission processing section 531 determines power transmission parameters (step S209). Specifically, the power transmission processing section 531 acquires policy information corresponding to the receiver device 20 as a power supply target from the policy information storage section 521 and determines power transmission parameters according to the power transmission policy indicated by the policy information, based on the power supply target information that has been received from the membership system 60.

After determining transmission parameters, the power transmission processing section 531 transmits a power transmission request to the transmitter device 30 (step S210). Specifically, the power transmission processing section 531 generates a power transmission request corresponding to the determined power transmission parameters and causes the power supply control system 50 to transmit the power transmission request to the transmitter device 30 via the communication unit 510.

The transmitter device 30 that has received the power transmission request starts power transmission to the receiver device 20 (step S211). Specifically, the transmitter device 30 transmits power to the receiver device 20, while adjusting the power transmission parameters based on the power transmission request received from the power supply control system 50.

When processing proceeds to step S212, the output control section 533 of the power supply control system 50 transmits an alert notification to the user terminal 10A via the communication unit 510 and via the membership system 60 (step S212).

The user terminal 10A that has received the alert notification causes the membership application AP1 to display the alert (step S213).

### (3) Processing flow for displaying receiver device information

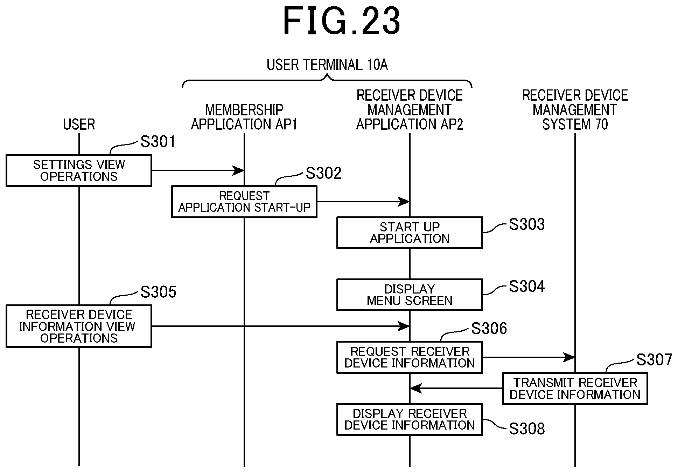

Fig. 23 is a sequence diagram illustrating an example of a processing flow for displaying receiver device information according to the present embodiment. The processing shown in Fig. 23 is started by the user for a registered receiver device 20 at any timing.

As shown in Fig. 23, first, the user performs settings view operations on the user terminal 10A (step S301). Specifically, the user selects a Settings View item on the registered device list screen displayed on the user terminal 10A by the membership application AP1.

In response to the settings view operations, the linking processing section 145 of the user terminal 10A causes the membership application AP1 to transmit an application start-up request to the receiver device management application AP2 (step S302).

Receiving the application start-up request, the receiver device management application AP2 starts up the application on its own (step S303).

After starting up the application, the receiver device management application AP2 displays a menu screen for viewing settings of the receiver device 20 (step S304).

Next, the user performs receiver device information view operations on the user terminal 10A (step S305). Specifically, the user selects the receiver device 20 desired to be viewed on the menu screen displayed on the user terminal 10A by the receiver device management application AP2.

In response to the receiver device information view operations, the linking processing section 145 of the user terminal 10A causes the receiver device management application AP2 to transmit a receiver device information request to the receiver device management system 70 (step S306).

When the communication unit 710 receives a receiver device information request from the receiver device management application AP2 (user terminal 10A), the linking processing section 732 of the receiver device management system 70 transmits receiver device information to the receiver device management application AP2 (step S307). Specifically, the linking processing section 732 acquires receiver device information corresponding to the user who has performed the receiver device information view operations from the power supply target information storage section 722 and transmits the acquired information to the receiver device management application AP2 via the communication unit 710.

The receiver device management application AP2 displays a screen for the receiver device information received (step S309).

The user may perform power supply setting at any timing, for the receiver device 20 as a power supply target. In this case, similarly to the registration of a receiver device 20, the user may perform operations for registering power supply setting information, the user terminal 10A (receiver device management application AP2) may transmit the power supply setting information, and the receiver device management system 70 may register the power supply setting information.

### <7. Screen example>

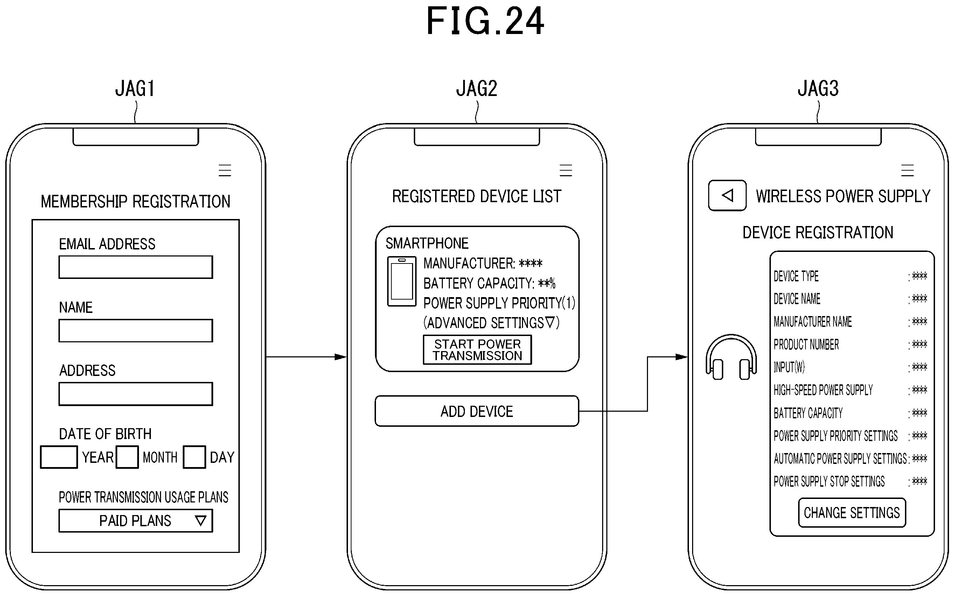

The processing flow according to the present embodiment has been described. Referring to Figs. 24 to 32, screen examples according to the present embodiment will be described.

### (1) Screen examples for membership application and receiver device management application

Referring to Figs. 24 to 27, screen examples for the membership application AP1 and the receiver device management application AP2 will be described.

### (1-1) Screens for membership registration and receiver device registration for receiver device management application

Referring to Fig. 24, screens for membership registration and receiver device registration for the receiver device management application AP2 will be described. Fig. 24 is a diagram illustrating examples of screen for membership registration and receiver device registration for the receiver device management application AP2 according to the present embodiment. Fig. 24 shows a membership registration screen JAG1, a registered device list screen JAG2, and a device registration screen JAG3.

The membership registration screen JAG1 is for registering membership related to the receiver device management application AP2. The membership registration screen JAG1 is displayed on the user terminal 10A by the receiver device management application AP2 during membership registration processing. The user can register as a member by inputting membership information on the membership registration screen JAG1 displayed on the user terminal 10A.

The registered device list screen JAG2 displays a list of registered receiver devices 20. The registered device list screen JAG2 is displayed on the user terminal 10A by the receiver device management application AP2 when registration of a receiver device 20 is completed after membership registration on the membership registration screen JAG1. The user can register a new receiver device 20 by selecting the Add Device item on the registered device list screen JAG2.

The device registration screen JAG3 is for registering a receiver device 20. The device registration screen JAG3 is displayed on the user terminal 10A by the receiver device management application AP2 when the Add Device item is selected on the registered device list screen JAG2. The user can register receiver device information and power supply setting information of the receiver device 20 on the device registration screen JAG3.

### (1-2) Screens for membership registration and application linking for membership application

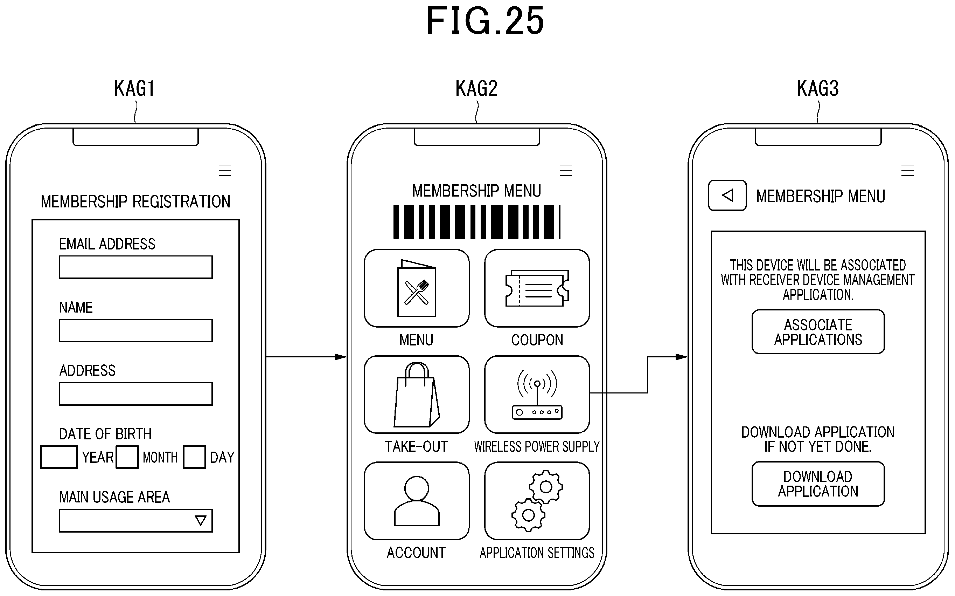

Referring to Fig. 25, screens for membership registration and application linking for the membership application AP1 will be described. Fig. 25 is a diagram illustrating examples of the screens for membership registration and application linking for the membership application AP1 according to the present embodiment. Fig. 25 shows a membership registration screen KAG1, a membership menu screen KAG2, and an application linking screen KAG3.

The membership registration screen KAG1 is for registering membership related to the membership application AP1. The membership registration screen KAG1 is displayed on the user terminal 10A by the membership application AP1 during membership registration processing. The user can register membership information on the membership registration screen KAG1 displayed on the user terminal 10A.

The membership menu screen KAG2 shows a menu for services. The membership menu screen KAG2 is displayed on the user terminal 10A by the membership application AP1 after membership registration. The membership menu screen KAG2 displays a Wireless Power Supply menu item. The Wireless Power Supply menu item is displayed on an existing menu screen as a result of adding a function for wireless power supply to an existing membership application AP1. The user can use wireless power supply by selecting the Wireless Power Supply menu item on the membership menu screen KAG2.

The application linking screen KAG3 is for linking applications. The application linking screen KAG3 is displayed on the user terminal 10A by the membership application AP1 when the Wireless Power Supply menu item is selected on the membership menu screen KAG2 when using wireless power supply for the first time. The user can associate the membership application AP1 with the receiver device management application AP2 by selecting the Application Linking item on the application linking screen KAG3.

### (1-3) Registered device list screen for membership application

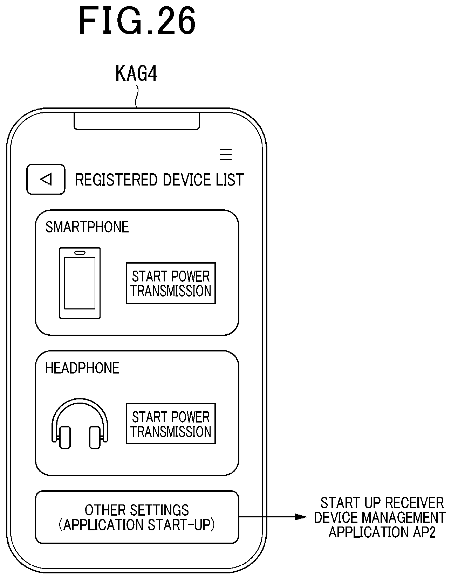

Referring to Fig. 26, a registered device list screen for the membership application AP1 will be described. Fig. 26 is a diagram illustrating an example of a registered device list screen for the membership application AP1 according to the present embodiment. Fig. 26 shows a registered device list screen KAG4.

The registered device list screen KAG4 displays a list of registered receiver devices 20. The registered device list screen KAG4 is displayed on the user terminal 10A by the membership application AP1 after application linking. The user can start power transmission (power supply) to the receiver device 20 by selecting the Start Power Transmission item on the registered device list screen KAG4. When the Other Settings (Application Start-Up) item is selected on the registered device list screen KAG4, the receiver device management application AP2 is started. Thus, the user can view or set information related to the receiver device 20 in the receiver device management application AP2.

### (1-4) Screens for viewing receiver device information for receiver device management application

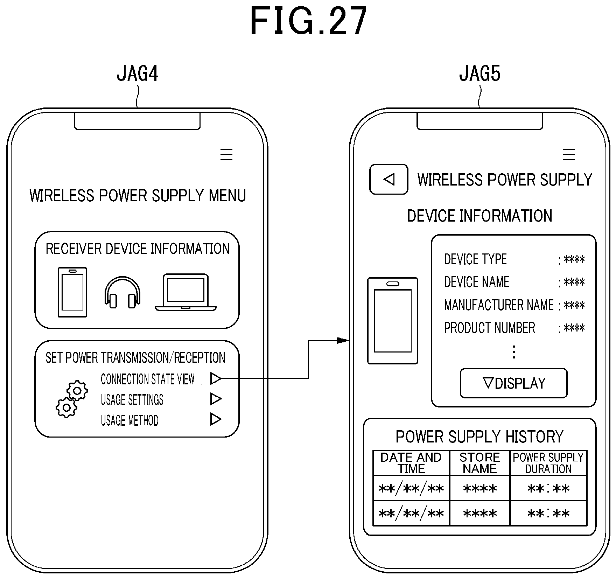

Referring to Fig. 27, screens for viewing receiver device information for the receiver device management application AP2 will be described. Fig. 27 is a diagram illustrating examples of the screens for viewing receiver device information for the receiver device management application AP2 according to the present embodiment. Fig. 27 shows a wireless power supply menu screen JAG4, and a registered device details screen JAG5.

The wireless power supply menu screen screen JAG4 shows a menu for wireless power supply. The wireless power supply menu screen JAG4 is displayed on the user terminal 10A by the receiver device management application AP2 when the Other Settings (Application Start-Up) item is selected on the registered device list screen KAG4 of the membership application AP1. The user can register a receiver device 20, can view receiver device information, can receive power supply, etc. by selecting the Receiver Device Information item on the wireless power supply menu screen JAG4. Also, the user can view connection status with the transmitter device 30, can view usage settings and usage method, etc. by selecting the Power Transmission Settings item on the wireless power supply menu screen JAG4.

The registered device details screen JAG5 displays detailed information related to a registered receiver device 20. The registered device details screen JAG5 is displayed on the user terminal 10A by the receiver device management application AP2 when, for example, the Connection Status View item is selected on the wireless power supply menu screen JAG4. The user can view receiver device information, power supply setting information, power transmission status, etc. of the registered receiver device 20 on the registered device details screen JAG5.

### (2) Screen examples for power supply control system

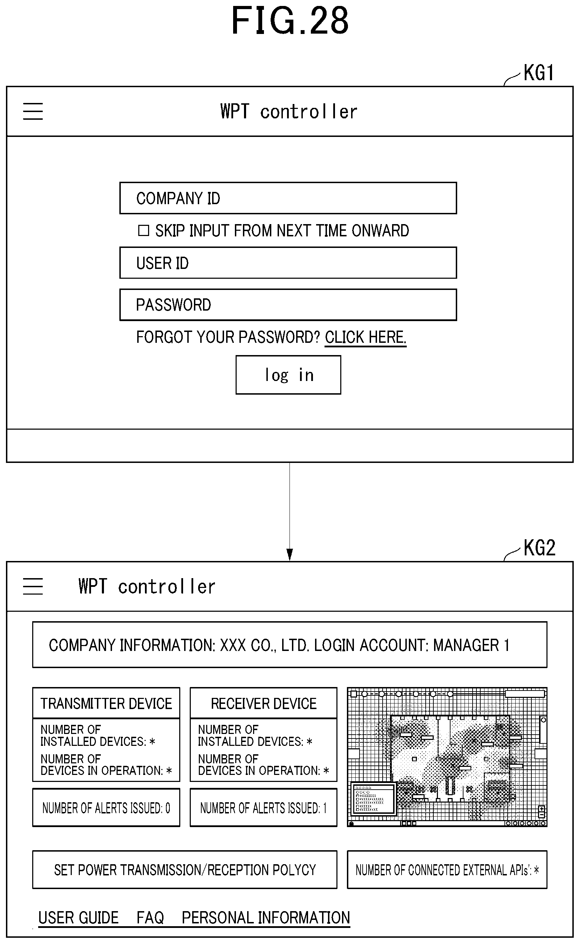

Referring to Figs. 28 to 32, screen examples for the power supply control system 50 will be described. The screens for the power supply control system 50 may be, for example, a management screen displayed on the management terminal 40.

### (2-1) Login screen and top screen

Referring to Fig. 28, a login screen and a top screen for the power supply control system 50 will be described. Fig. 28 is a diagram illustrating examples of the login screen and the top screen for the power supply control system 50 according to the present embodiment. Fig. 28 shows a login screen KG1 and a top screen KG2.

The login screen KG1 is a screen for the manager to log in to the power supply control system 50. The login screen KG1 is displayed on the management terminal 40 by the management application in response to the operations from the manager. By inputting the manager information (e.g., company ID, user ID, and password) on the login screen KG1 displayed on the management terminal 40, the manager can log in to the power supply control system 50.

The top screen KG2 relates to management of the wireless power supply system 1A. The top screen KG2 is displayed on the management terminal 40 by the management application after logging in. The top screen KG2 displays items related to user information, receiver devices 20, transmitter devices 30, power transmission and reception policy settings, number of connections of external APIs (application programming interfaces), store map, etc. The manager can select items related to various types of information on the top screen KG2 to view details of the selected information.

### (2-2) Screens for receiver devices

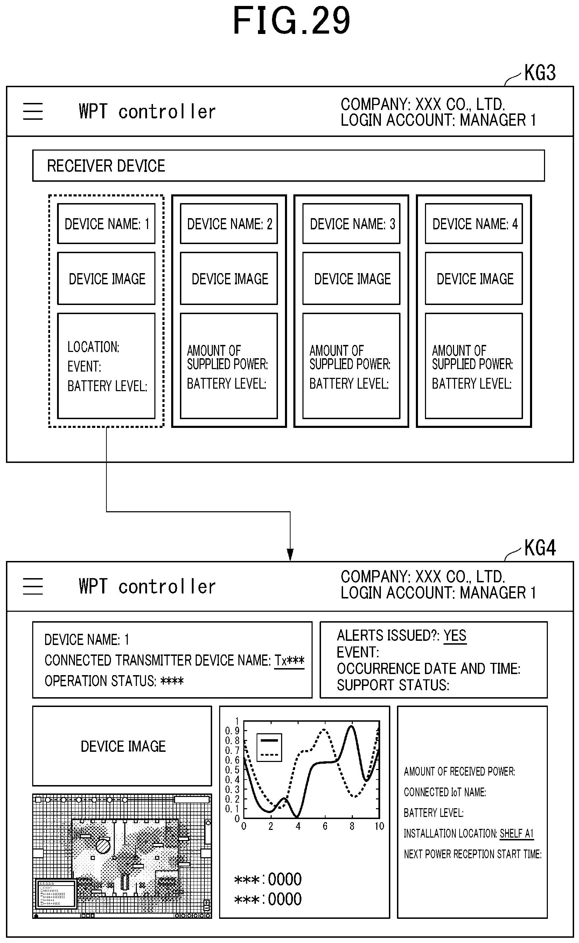

Referring to Fig. 29, screens for receiver devices 20 for the power supply control system 50 will be described. Fig. 29 is a diagram illustrating examples of the screens for receiver devices 20 for the power supply control system 50 according to the present embodiment. Fig. 29 shows a receiver device list screen KG3 and a receiver device details screen KG4.

The receiver device list screen KG3 displays a list of the receiver devices 20 currently using the wireless power supply service in the stores managed by the manager. The receiver device list screen KG3 is displayed on the management terminal 40 by the management application when the item related to receiver devices 20 is selected on the top screen KG2. The manager can select the item related to each receiver device 20 on the receiver device list screen KG3 to view details of the selected receiver device 20.

The receiver device details screen KG4 displays details of a receiver device 20. The receiver device details screen KG4 is displayed on the management terminal 40 by the management application when the item related to a receiver device 20 is selected on the receiver device list screen KG3. The receiver device details screen KG4 displays the receiver device information, power supply status, whether alerts have been issued, etc. The power supply status may be displayed as a map or graph.

### (2-3) Screens for transmitter devices

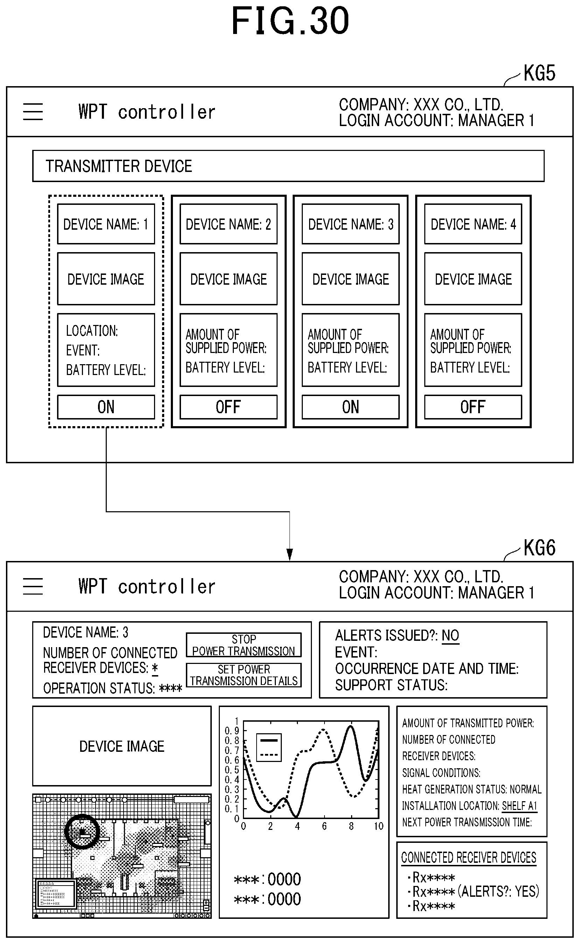

Referring to Fig. 30, screens for transmitter devices 30 for the power supply control system 50 will be described. Fig. 30 is a diagram illustrating examples of the screens for transmitter devices 30 for the power supply control system 50 according to the present embodiment. Fig. 30 shows a transmitter device list screen KG5 and a transmitter device details screen KG6.

The transmitter device list screen KG5 displays a list of the transmitter devices 30 installed in the stores managed by the manager. The transmitter device list screen KG5 is displayed on the management terminal 40 by the management application when the item related to a transmitter device 30 is selected on the top screen KG2. The manager can select the item related to each transmitter device 30 on the transmitter device list screen KG5 to view details of the selected transmitter device 30.

The transmitter device details screen KG6 displays details of a transmitter device 30. The transmitter device details screen KG6 is displayed on the management terminal 40 by the management application when the item related to a transmitter device 30 is selected on the transmitter device list screen KG5. The transmitter device details screen KG6 displays the transmitter device information, power transmission status, whether alerts have been issued, etc. The power transmission status may be displayed as a map or graph.

### (2-4) Power transmission and reception map screen

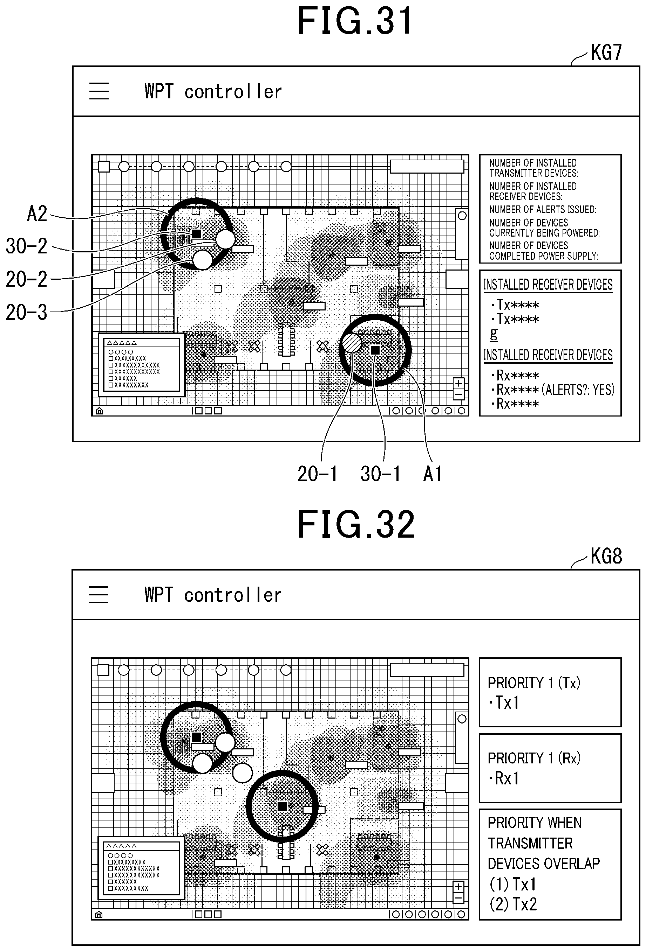

Referring to Fig. 31, a power transmission and reception map screen for the power supply control system 50 will be described. Fig. 31 is a diagram illustrating an example of the transmission and reception map screen for the power supply control system 50 according to the present embodiment. Fig. 31 shows a power transmission and reception map screen KG7.

The power transmission and reception map screen KG7 displays a power transmission and reception map. The power transmission and reception map shows locations of receiver devices 20, locations of transmitter devices 30, power transmission ranges, power transmission and reception statuses, etc. In the store shown in the power transmission reception map of Fig. 31, three receiver devices 20-1 to 20-3, and two transmitter devices 30-1 and 30-2 are installed. In a power transmission range A1 of the transmitter device 30-1, the receiver device 20-1 is present. In a power transmission range A2 of the transmitter device 30-2, the receiver devices 20-2 and 20-3 are present. The power transmission and reception statuses may correspond, for example, to information indicating the number of transmitter devices, the number of receiver devices, the number of alerts issued, the number of devices currently being supplied with power, the number of devices completed power supply, etc. in the store shown in the power transmission and reception map.

### (2-5) Policy setting screen

Referring to Fig. 32, a policy setting screen for the power supply control system 50 will be described. Fig. 32 is a diagram illustrating an example of the policy setting screen for the power supply control system 50 according to the present embodiment. Fig. 32 shows a policy setting screen KG8.

The policy setting screen KG8 displays policy settings. Similarly to the power transmission and reception map screen KG7, the policy setting screen KG8 may display a power transmission and reception map. The policy settings displayed on the policy setting screen KG8 may be, for example, a priority order in power transmission and reception. Examples may include a priority order of transmitter devices 30 (Tx) performing power transmission, a priority order of receiver devices 20 (Rx) receiving power, a priority order when transmitter devices 30 are overlapped, etc.

As described above, the wireless power supply system 1A according to the present embodiment includes: the receiver device processing section 142 that registers receiver device information with the receiver device management system 70 (first system), the receiver device information, the receiver information acquired via the receiver device application AP2 (first application) that is able to register the receiver device 20 as a power supply target in wireless power supply, the receiver device management system 70 corresponding to the receiver device management application AP2; the linking processing section 145 (first linking processing section) that associates the receiver device management application AP2 with the membership application AP1 (second application) provided to users who use a space where the transmitter device 30 for wireless power supply is installed, based on an operation from the membership application AP1; the power supply request section 143 that causes an application as a requester to transmit a power supply request to a corresponding system in response to receiving the power supply request from the user via the receiver device management application AP2 or the membership application AP1, for the receiver device 20 indicated by the receiver device information acquired from the receiver device management system 70 as a result of linking; the linking processing section 632 (second linking processing section) that causes the system corresponding to the application as a requester to associate the receiver device information of the receiver device 20 selected as a power supply target, with the power supply control system 50 in response to receiving the power supply request from the application as a requester; and the power transmission processing section 531 that identifies the transmitter device 30 from which power can be transmitted to the receiver device 20 as a power supply target, based on the associated receiver device information and causes the power supply control system 50 to transmit a power transmission request to the identified transmitter device 30.

With this configuration, the user can register the receiver device 20 with the receiver device management application AP2 and perform link operations on the membership application AP1 to associate the information related to the receiver device 20 registered with the receiver device management application AP2, with the membership application AP1. Thus, even if there are multiple membership applications AP1 that are different between business facilities, the receiver device 20 can be registered with a receiver device management application AP2 common to these membership applications AP1, and therefore it is no longer necessary to register the receiver device 20 for each membership application AP1.

In this way, the wireless power supply system 1A according to the present embodiment can reduce barriers to user adoption of wireless power supply.

### <8. Modifications>

The second embodiment of the present embodiment has been described so far. Subsequently, modifications of the present embodiment described above will be described. The modifications described below may be applied to the present embodiment singly or in combination. These modifications may be applied in place of or in addition to the configuration described in the present embodiment.

The present embodiment described above has described an example in which power transmission parameters are determined by the power transmission processing section 531 based on the power supply target information (receiver device information or power supply setting information), but this is not a limiting example. For example, the power transmission processing section 531 may determine power transmission parameters based on the membership information of the user having the receiver device 20 as a power transmission target.

In this case, when associating the information related to a power transmission target with the power supply control system 50, the membership system 60 may also associate therewith the membership information of the user having the receiver device 20 as a power transmission target. The power transmission processing section 531 may determine power transmission parameters according to the power transmission policy, based on the membership information of the user acquired from the membership system 60. The membership information in question may include, for example, usage status information showing the user's service usage status. The power transmission processing section 531 may determine power transmission parameters according to the power transmission policy, based on the usage status information. The power transmission processing section 531 may determine, for example, a good customer level from the usage status information. The power transmission processing section 531 may determine a power supply priority based on the good customer level and determine transmission parameters. For example, the power transmission processing section 531 may assign higher priority to better customers and lower priority to less desirable customers.

The present embodiment described above has dealt with the case where the user provides a power supply request via the membership application AP1, but this is not a limiting example. For example, the user may be able to provide a power supply request via the receiver device management application AP2.

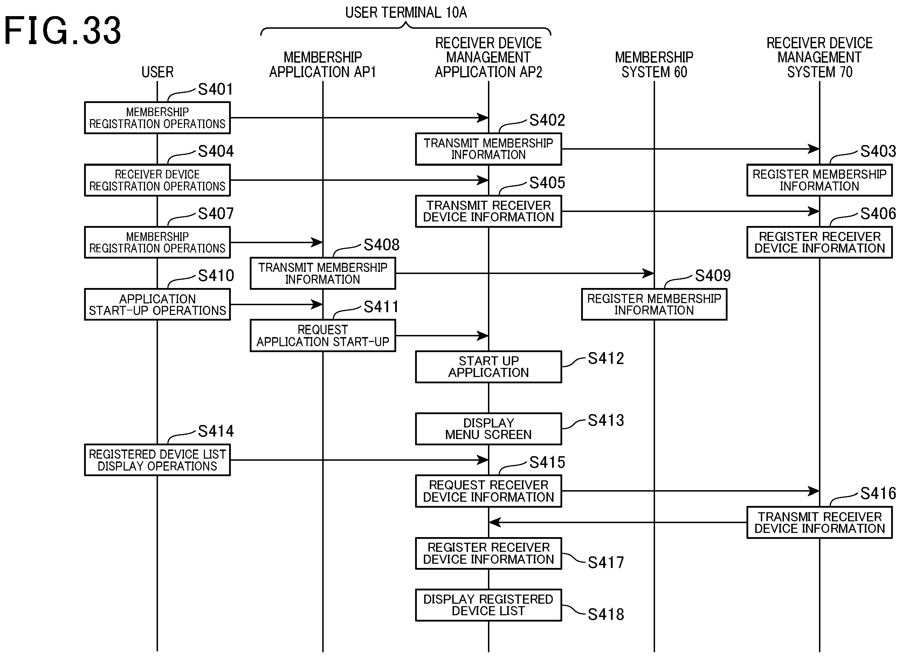

Referring to Figs. 33 to 37, the case where the user provides a power supply request via the receiver device management application AP2 will be described.

### (Processing flow for various types of registration and displaying registered device list)

Fig. 33 is a sequence diagram illustrating an example of a processing flow for various types of registration and displaying a registered device list according to a modification of the present embodiment.

Since steps S401 to S409 shown in Fig. 33 are the same as steps S101A to S109A shown in Fig. 21, description will be omitted.

Subsequent to step S409, the user performs application start-up operations on the user terminal 10A (step S410). Specifically, the user selects the Application Start-Up item on the application start-up screen displayed on the user terminal 10A by the membership application AP1.

In response to the application start-up operations, the linking processing section 145 of the user terminal 10A causes the membership application AP1 to transmit an application start-up request to the receiver device management application AP2 to start up the receiver device management application AP2 (step S411).

Receiving the application start-up request, the receiver device management application AP2 starts up the application on its own (step S412).

After starting up the application, the receiver device management application AP2 displays a menu screen related to the receiver device 20 (step S413).

Next, the user performs registered device list displaying operations on the user terminal 10A (step S414). Specifically, the user selects the Display Registered Device List item on the menu screen displayed on the user terminal 10A by the receiver device management application AP2.

When the registered device list displaying operations are accepted by the input unit 120, the linking processing section 145 of the user terminal 10A causes the receiver device management application AP2 to transmit a receiver device information request (example of the link request) to the receiver device management system 70 (step S415).

When the communication unit 710 receives the receiver device information request from the receiver device management application AP2 (user terminal 10A), the linking processing section 732 of the receiver device management system 70 causes the receiver device management system 70 to transmit (associate) receiver device information to (with) the receiver device management application AP2 (step S416).

The receiver device processing section 142 of the user terminal 10A registers the receiver device information received from the receiver device management system 70 by the communication unit 110 with the storage unit 130 (step S417).

The output control section 144 of the user terminal 10A causes the receiver device management application AP2 to display a registered device list screen, based on the power supply target information (step S418).

### (Processing flow for starting power supply)

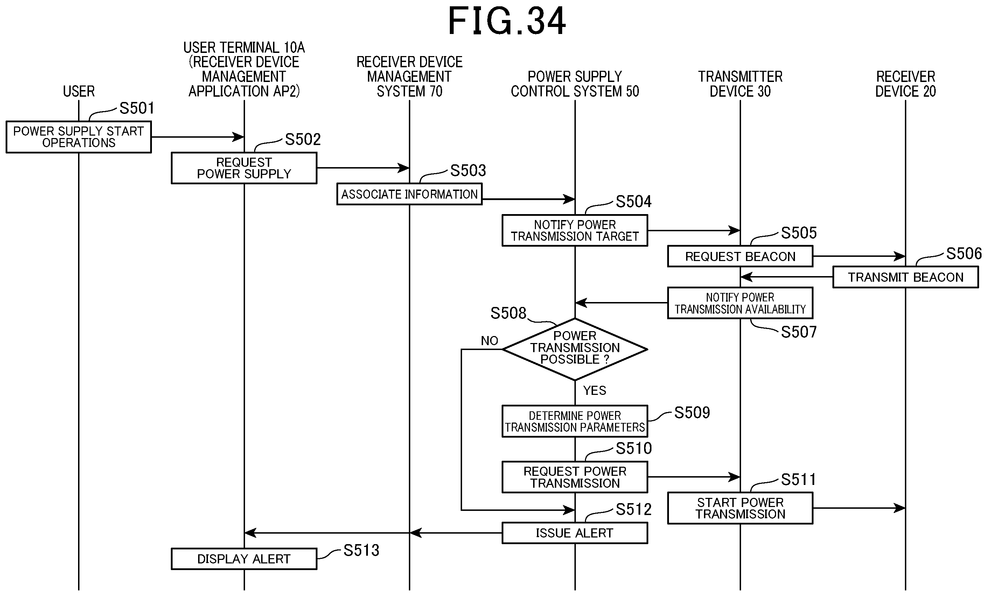

Fig. 34 is a sequence diagram illustrating an example of a processing flow for starting power supply according to a modification of the second embodiment. The processing shown in Fig. 34 may be performed, for example, subsequent to the processing shown in Fig. 33. The following description will be given taking an example in which a receiver device 20 as a power supply target is selected by the user from the registered device list displayed on the receiver device management application AP2 at step S418 of Fig. 33.

Unlike the present embodiment described above, the power supply control system 50 is communicably connected to the receiver device management system 70, instead of the membership system 60, via the network NW. Thus, the linking processing section 732 of the receiver device management system 70 functions as the second linking processing section, instead of the linking processing section 632 of the membership system 60.

As shown in Fig. 34, first, the user performs power supply start operations on the user terminal 10A (step S501). Specifically, the user selects a receiver device 20 as a power supply target from the registered device list displayed on the user terminal 10A by the receiver device management application AP2 and provides a power supply request.

In response to the power supply start operations, the power supply request section 143 of the user terminal 10A causes the receiver device management application AP2 to transmit a power supply request to the receiver device management system 70 (step S502). Specifically, in the power supply request processing, the power supply request section 143 causes the receiver device management application AP2 to transmit a power supply request to the receiver device management system 70 via the communication unit 110, for the receiver device 20 selected in response to the power supply start operations inputted by the user.

The linking processing section 732 of the receiver device management system 70 associates the power supply target information with the power supply control system 50 (step S503). Specifically, the linking processing section 732 acquires corresponding power supply target information from the power supply target information storage section 722, for the receiver device 20 as a power supply target which is indicated by the power supply request received from the user terminal 10A by the communication unit 710 and causes the receiver device management system 70 to associate (transmit) the acquired information with (to) the power supply control system 50 via the communication unit 710.

Based on the power supply target information received from the receiver device management system 70 by the communication unit 510, the power transmission processing section 531 of the power supply control system 50 transmits a power transmission target notification to the transmitter device 30 (step S504).

Since steps S505 to S510 are the same as steps S205 to S210 shown in Fig. 22, description will be omitted.

### (Processing flow for displaying receiver device information)

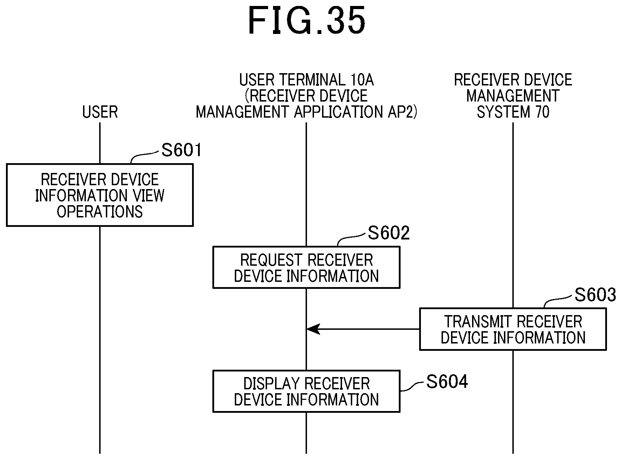

Fig. 35 is a sequence diagram illustrating an example of a processing flow for displaying receiver device information according to a modification of the present embodiment. The processing shown in Fig. 35 is started by the user at any timing for a registered receiver device 20.

Since steps S601 to S604 shown in Fig. 35 are the same as steps S305 to S308 shown in Fig. 23, description will be omitted.

### (Screens for application linking for membership application)

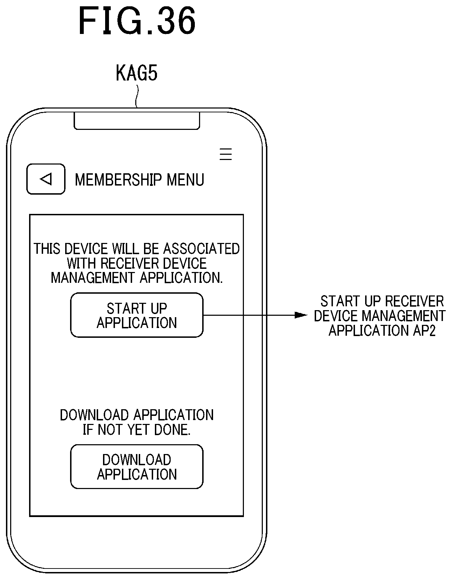

Fig. 36 is a diagram illustrating an example of a screen for application linking for the membership application AP1 according to a modification of the present embodiment. In the case where the user provides a power supply request via the receiver device management application AP2, if the Wireless Power Supply menu item is selected on the membership menu screen KAG2 shown in Fig. 25, the application linking screen KAG5 shown in Fig. 36 is displayed instead of the application linking screen KAG3 shown in Fig. 25.

The application linking screen KAG5 is for causing the membership application AP1 to start up the receiver device management application AP2 to establish linking between the membership application AP1 and the receiver device management application AP2. The user can associate the membership application AP1 with the receiver device management application AP2 by selecting the Application Start-Up item on the application linking screen KAG5.

### (Screens for viewing power supply start and receiver device information for receiver device management application)

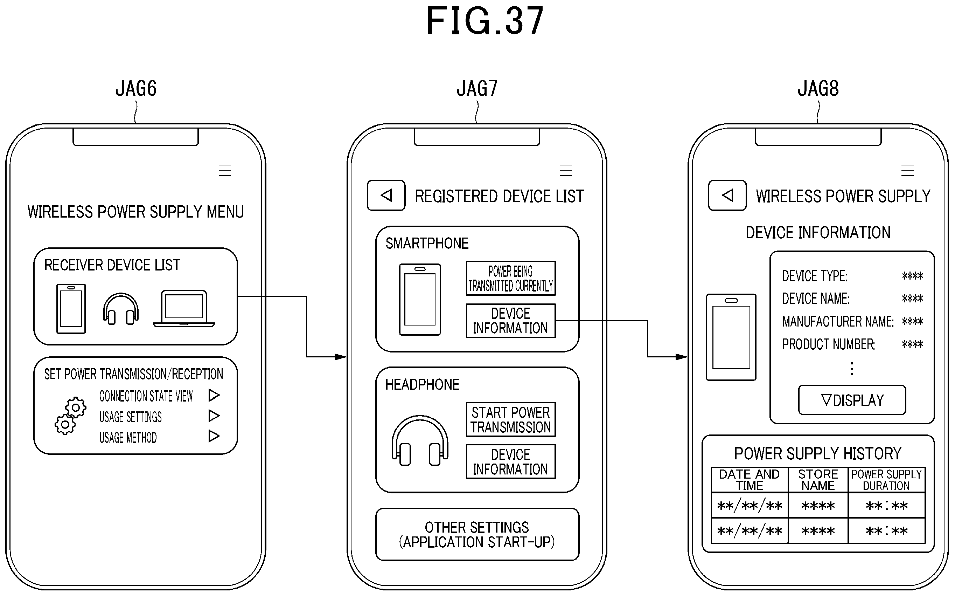

Fig. 37 is a diagram illustrating examples of the screens for viewing power supply start and receiver device information for the receiver device management application AP2 according to a modification of the second embodiment. In the case where the user provides a power supply request via the receiver device management application AP2, if the receiver device management application AP2 is started up on the application linking screen KAG5 shown in Fig. 36, the a wireless power supply menu screen JAG6 shown in Fig. 37 is displayed. The wireless power supply menu screen screen JAG6 is the same as the wireless power supply menu screen JAG4 shown in Fig. 27.

If the Receiver Device List item is selected on the wireless power supply menu screen JAG6, a registered device list screen JAG7 shown in Fig. 37 is displayed. The user can start power supply to the receiver device 20 by selecting the Start Power Transmission item on the registered device list screen JAG7. Also, the user can view details of the receiver device 20 by selecting the Device Information item on the registered device list screen JAG7.

If the Device Information item is selected on the registered device list screen JAG7, a registered device details screen JAG8 shown in Fig. 37 is displayed. The registered device details screen JAG8 is the same as the registered device details screen JAG5 shown in Fig. 27.

Some modifications of the second embodiment of the present invention have been described.

A part or all of the functions of the wireless power supply system 1A, the user terminal 10A, the power supply control system 50, the membership system 60, and the receiver device management system 70 in the present embodiment may be achieved by a computer. In this case, programs that achieve the functions may be recorded on a computer-readable recording medium so that the computer system can read and run the programs recorded on the recording medium. The computer system referred to herein includes an operating system (OS) and hardware components such as peripheral devices. The computer readable recording medium refers to a storage device such as a portable medium, e.g., a flexible disk, magneto-optical disk, ROM, and CD-ROM, or a hard disk incorporated in the computer system. The computer readable recording medium may include a medium dynamically retaining programs for a short period of time, such as a communication line that transmits programs through a network such as the Internet or a telecommunication line such as a telephone line, or a medium retaining the programs for a given period of time in that case, such as a volatile memory of the computer system serving as a server or a client. The programs described above may achieve part of the functions described above, or may achieve the functions in combination with programs recorded in advance in a computer system, or may achieve the functions using a programmable logic device such as a field programmable gate array (FPGA).

The second embodiment of the present invention and modifications thereof have been described in detail referring to the drawings; however, specific configurations are not limited to those described above, but various design changes, etc. can be made within the scope not departing from the spirit of the present invention.

### [Industrial Applicability]

According to the present invention, barriers to user adoption of wireless power supply can be reduced.

### [Reference Signs List]

- 1, 1A: Wireless power supply system
- 10, 10A: User terminal
- 20 (20-1 to 20-M): Receiver device
- 30 (30-1 to 30-Q): Transmitter device
- 40: Management terminal
- 50: Power supply control system
- 60: Membership system
- 70: Receiver device management system
- 110: Communication unit
- 120: Input unit
- 130: Storage unit
- 140, 140A: Control unit
- 141: Membership processing section
- 142: Receiver device processing section
- 143: Power supply request section
- 144: Output control section
- 145: Linking processing section
- 150: Output unit
- 510: Communication unit
- 520: Storage unit
- 521: Policy information storage section
- 522: Power supply management information storage section
- 530: Control unit
- 531: Power transmission processing section
- 532: Power supply management section
- 533: Output control section
- 610: Communication unit
- 620: Storage unit
- 621: Membership information storage section
- 622: Power supply target information storage section
- 630: Control unit
- 631: Data processing section
- 632: Linking processing section
- 633: Output control section
- 710: Communication unit
- 720: Storage unit
- 721: Membership information storage section
- 722: Power supply target information storage section
- 730: Control unit
- 731: Data processing section
- 732: Linking processing section
- 733: Output control section
- AP, AP1: Membership application
- AP2: Receiver device management application
- NW: Network

## Claims

1. A wireless power supply system, comprising
a receiver device processing section that registers receiver device information with a system corresponding to an application provided to users of a space where a transmitter device for wireless power supply is installed, the receiver device information being related to a receiver device owned by a user of the application, the receiver device information being acquired via the application;
a power supply request section that causes the application to transmit a power supply request to the system corresponding to the application in response to receiving the power supply request from the user via the application;
a linking processing section that causes the system corresponding to the application to associate the receiver device information of a receiver device selected as a power supply target, with a power supply control system in response to receiving the power supply request from the application; and
a power transmission processing section that identifies a transmitter device that can transmit power to the receiver device as the power supply target, based on the receiver device information associated by the system corresponding to the application and causes the power supply control system to transmit a power transmission request to the identified transmitter device.

2. The wireless power supply system according to claim 1, wherein
the linking processing section causes the system corresponding to the application to associate power supply setting information that is set for each receiver device by the user via the application, with the power supply control system; and
the power transmission processing section controls power transmission performed by the transmitter device based on the receiver device information and the power supply setting information.

3. The wireless power supply system according to claim 1, further comprising
a power supply management section that acquires power supply status information indicating power supply status of the receiver device as a result of power transmission from the transmitter device; and
an output control section that causes the application to display the power supply status for the receiver device based on the acquired power supply status information.

4. The wireless power supply system according to claim 1, wherein
the power transmission processing section determines a power transmission parameter based on a power transmission policy and controls power transmission of the transmitter device based on the determined power transmission parameter.

5. The wireless power supply system according to claim 4, wherein
the power transmission processing section determines the power transmission parameter according to the power transmission policy, based on the receiver device information acquired from the system corresponding to the application.

6. The wireless power supply system according to claim 4, wherein
the power transmission processing section determines the power transmission parameter according to the power transmission policy, based on usage status information indicating a service usage status of the user, acquired from the system corresponding to the application.

7. A computer-implemented wireless power supply method, comprising steps of
registering receiver device information with a system corresponding to an application provided to users of a space where a transmitter device for wireless power supply is installed, the receiver device information being related to a receiver device owned by a user of the application, the receiver device information being acquired via the application;
causing the application to transmit a power supply request to the system corresponding to the application in response to receiving the power supply request from the user via the application;
causing the system corresponding to the application to associate the receiver device information of a receiver device selected as a power supply target, with a power supply control system in response to receiving the power supply request from the application; and
identifying a transmitter device that can transmit power to the receiver device as the power supply target, based on the receiver device information associated by the system corresponding to the application and causing the power supply control system to transmit a power transmission request to the identified transmitter device.

8. A program allowing a computer to
register receiver device information with a system corresponding to an application provided to users of a space where a transmitter device for wireless power supply is installed, the receiver device information being related to a receiver device owned by a user of the application, the receiver device information being acquired via the application;
cause the application to transmit a power supply request to the system corresponding to the application in response to receiving the power supply request from the user via the application;
cause the system corresponding to the application to associate the receiver device information of a receiver device selected as a power supply target, with a power supply control system in response to receiving the power supply request from the application; and
identify a transmitter device that can transmit power to the receiver device as the power supply target, based on the receiver device information associated by the system corresponding to the application and cause the power supply control system to transmit a power transmission request to the identified transmitter device.

9. A wireless power supply system, comprising
a receiver device processing section that registers receiver device information with a first system corresponding to a first application that can register a receiver device as a power supply target in wireless power supply, the information being related to a receiver device owned by a user and acquired via the first application;
a first linking processing section that associates the first application with a second application provided to users of a space where a transmitter device for the wireless power supply is installed, based on an operation from the second application;
a power supply request section that causes an application as a requester of a power supply request to transmit the power supply request to a corresponding system in response to receiving the power supply request from the user via the first application or the second application, the power supply request being for a receiver device indicated by the receiver device information acquired from the first system as a result of the linking;
a second linking processing section that causes a system corresponding to the application as the requester to associate the receiver device information of a receiver device selected as the power supply target, with a power supply control system in response to receiving the power supply request from the application as the requester; and
a power transmission processing section that identifies a transmitter device that can transmit power to the receiver device as the power supply target, based on the associated receiver device information and causes the power supply control system to transmit a power transmission request to the identified transmitter device.

10. The wireless power supply system according to claim 9, wherein when the user provides the power supply request via the second application,
the first linking processing section causes the second application to transmit a link request to the first system to cause the first system to associate the receiver device information with the second application;
the power supply request section causes the second application to transmit the power supply request to a second system that is a system corresponding to the second application; and
the second linking processing section causes the second system to associate the receiver device information with the power supply control system.

11. The wireless power supply system according to claim 9, wherein when the user provides the power supply request via the first application,
the first linking processing section causes the second application to start up the first application, causes the first application to transmit a link request to the first system and causes the first system to associate the receiver device information with the first application;
the power supply request section causes the first application to transmit the power supply request to the first system; and
the second linking processing section causes the first system to associate the receiver device information with the power supply control system.

12. The wireless power supply system according to claim 9, wherein
the power transmission processing section controls power transmission of the transmitter device based on power supply setting information in addition to the receiver device information, the power supply setting information being set for each receiver device by the user via the first application and associated with the power supply control system.

13. The wireless power supply system according to claim 9, further comprising
a power supply management section that acquires power supply status information indicating power supply status of the receiver device as a result of power transmission from the transmitter device; and
an output control section that causes the first application to display the power supply status for the receiver device based on the acquired power supply status information.

14. The wireless power supply system according to claim 9, wherein
the power transmission processing section determines a power transmission parameter based on a power transmission policy and controls power transmission of the transmitter device based on the determined power transmission parameter.

15. The wireless power supply system according to claim 14, wherein
the power transmission processing section determines the power transmission parameter according to the power transmission policy, based on the receiver device information acquired from the first system.

16. The wireless power supply system according to claim 14, wherein
the power transmission processing section determines the power transmission parameter according to the power transmission policy, based on usage status information indicating a service usage status of the user, acquired from the second system corresponding to the second application.

17. A computer-implemented wireless power supply method, comprising steps of
registering receiver device information with a first system corresponding to a first application that can register a receiver device as a power supply target in wireless power supply, the information being related to a receiver device owned by a user and acquired via the first application;
associating the first application with a second application provided to users of a space where a transmitter device for the wireless power supply is installed, based on an operation from the second application;
causing an application as a requester of a power supply request to transmit the power supply request to a corresponding system in response to receiving the power supply request from the user via the first application or the second application, the power supply request being for a receiver device indicated by the receiver device information acquired from the first system as a result of the linking;
causing a system corresponding to the application as the requester to associate the receiver device information of a receiver device selected as the power supply target, with a power supply control system in response to receiving the power supply request from the application as the requester; and
identifying a transmitter device that can transmit power to the receiver device as the power supply target, based on the associated receiver device information and causing the power supply control system to transmit a power transmission request to the identified transmitter device.

18. A program allowing a computer to
register receiver device information with a first system corresponding to a first application that can register a receiver device as a power supply target in wireless power supply, the information being related to a receiver device owned by a user and acquired via the first application;
associate the first application with a second application provided to users of a space where a transmitter device for the wireless power supply is installed, based on an operation from the second application;
cause an application as a requester of a power supply request to transmit the power supply request to a corresponding system in response to receiving the power supply request from the user via the first application or the second application, the power supply request being for a receiver device indicated by the receiver device information acquired from the first system as a result of the linking;
cause a system corresponding to the application as the requester to associate the receiver device information of a receiver device selected as the power supply target, with a power supply control system in response to receiving the power supply request from the application as the requester; and
identify a transmitter device that can transmit power to the receiver device as the power supply target, based on the associated receiver device information and cause the power supply control system to transmit a power transmission request to the identified transmitter device.
